# EUROPÄISCHE PATENTSCHRIFT

(11) **EP 1 226 992 B1**
(45) Veröffentlichungstag und Bekanntmachung des Hinweises auf die Patenterteilung: **21.07.2004**
(21) Anmeldenummer: 01129357.8
(22) Anmeldetag: 17.12.2001
(51) Int. Cl.: B60K 17/02, F16D 25/10, F16D 21/06

(54) **Mehrfachkupplungseinrichtung, als vollständige Baueinheit in einem Antriebsstrang einbaubar**
Multiple clutch device adapted to be mounted in a drive train as preassembled unit
Dispositif d'accouplement multiple adapté à être monté comme unité de montage préassemblée

(30) Priorität: 25.01.2001 DE 10103306; 28.03.2001 DE 10115236; 30.06.2001 DE 10131766
(43) Veröffentlichungstag der Anmeldung: 31.07.2002
(73) Patentinhaber: ZF Sachs AG, 97424 Schweinfurt (DE)
(72) Erfinder: Ebert, Angelika, 97421 Schweinfurt (DE); Grosspietsch, Wolfgang, Dipl.-Ing., 97421 Schweinfurt (DE); Kundermann, Wolfgang, Dipl.-Ing., 97422 Schweinfurt (DE); Stampf, Volker, Dipl.-Ing., 97422 Schweinfurt (DE); Meyer, Andre, Dipl.-Ing., 97424 Schweinfurt (DE); Kraus, Paul, Dipl.-Ing., 97464 Niederwerrn (DE); Steiner, Eduard, Dipl.-Ing., 97228 Rottendorf (DE)

(56) Entgegenhaltungen:
- DE-A- 2 142 432
- DE-A- 3 819 702
- DE-A- 4 332 466
- DE-A- 4 415 664
- US-A- 4 732 253
- US-A- 5 960 675

## Beschreibung

Die Erfindung betrifft allgemein eine Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe, wobei die Kupplungseinrichtung eine einer ersten Getriebeeingangswelle des Getriebes zugeordnete erste Kupplungsanordnung, ggf. nasslaufende Lamellen-Kupplungsanordnung, und eine einer zweiten Getriebeeingangswelle des Getriebes zugeordnete zweite Kupplungsanordnung, ggf. nasslaufende Lamellen-Kupplungsanordnung, aufweist zur Momentenübertragung zwischen der Antriebseinheit und dem Getriebe. Eine solche Gattungsgemäße Kupplungseinrichtung ist beispielweise in der DE 43 32 466 offenbart. Die Erfindung betrifft ferner eine Kombination aus einer derartigen Mehrfach- oder Doppel-Kupplungseinrichtung, einer Antriebseinheit (ggf. Brennkraftmaschine) und einem im Hinblick auf die Kupplungseinrichtung ausgelegten Getriebe (insbesondere Doppelkupplungs- oder Lastschaltgetriebe), sowie einen aus einer derartigen Kombination aufgebauten Kraftfahrzeug-Antriebsstrang.

In verschiedenen deutschen Patentanmeldungen der Anmelderin sind nasslaufende Doppelkupplungs-Konstruktionen offenbart, die im fertiggestellten Antriebsstrang an den radial geschachtelten Getriebeeingangswellen (von den Getriebeeingangswellen ist wenigstens eine als Hohlwelle ausgebildet und eine der Getriebeeingangswellen erstreckt sich durch eine andere, als Hohlwelle ausgebildete Getriebeeingangswelle) in beiden Axialrichtungen abgestützt. Es wird hierzu auf die Offenlegungsschriften DE 100 04 179 A1, DE 100 04 186 A1, DE 100 04 189 A1, DE 100 04 190 A1, DE 100 04 195 A1 verwiesen, die zur gleichen Patentfamilie gehören.

Bei den Konstruktionen der genannten Offenlegungsschriften weisen die beiden radial geschachtelten Lamellen-Kupplungsanordnungen jeweils eine Ausgangsseite mit einem Nabenteil auf, das auf einen jeweiligen Endabschnitt der zugeordneten Getriebeeingangswelle aufgeschoben ist bzw. wird. Das zur Ausgangsseite der radial inneren Lamellen-Kupplungsanordnung zugehörige Nabenteil ist im fertig montierten Zustand der Doppelkupplung in beiden Axialrichtungen an den Getriebeeingangswellen abstützbar, und zwar mit einem gewissen, bei der Montage einzustellenden Axialspiel. Die Abstützung erfolgt in Richtung zum Getriebe über ein Axiallager an einer Endfläche der anderen, radial äußeren Getriebeeingangswelle und in Richtung zur Antriebseinheit über einen an der radial inneren Getriebeeingangswelle nach dem Aufschieben des Nabenteils anzubringenden Sprengring. Zum Einstellen des zum Längenausgleich bei Wärmeausdehnung dienenden Axialspiels wird - soweit erforderlich - zwischen dem Nabenteil und dem Sprengring noch wenigstens eine Ausgleichsscheibe montiert.

Als Eingangsseite der Doppelkupplung dient ein im eingebauten Zustand eine sich durch eine Öffnung eines Deckels oder einer Verschlusswandung der Getriebeglocke erstreckende Eingangsnabe oder Eingangswelle, die über ein Mitnehmerblech mit dem Außenlamellenträger der radial äußeren Lamellen-Kupplungsanordnung gekoppelt ist, der als Eingangsseite dieser Kupplungsanordnung dient. Das Nabenteil der radial inneren Lamellen-Kupplungsanordnung und die radial innere Getriebeeingangswelle, auf die dieses Nabenteil aufgeschoben ist bzw. aufzuschieben ist, werden in Richtung zur Antriebseinheit durch die Eingangsnabe bzw. Eingangswelle verdeckt, so dass der die Axialabstützung in Richtung zur Antriebseinheit gehende Sprengring nicht montiert werden kann, wenn die Eingangsnabe bzw. Eingangswelle an Ort und Stelle ist. Bei der Montage der Doppelkupplung muss deshalb im Falle einer Anlieferung einer vormontierten Doppelkupplung die Doppelkupplung zum Teil wieder demontiert werden, um die Doppelkupplung getriebeseitig anbringen und axial festlegen zu können. Bei den angesprochenen Konstruktionen der Anmelderin kann hierzu nach dem Aufschieben der vormontierten, als Baueinheit vorliegenden Doppelkupplung ein das Mitnehmerblech am Außenlamellenträger sichernder Sicherungs- oder Sprengring und die Eingangsnabe bzw. Eingangswelle samt daran angeschweißtem Mitnehmerblech entfernt werden. Nach Einstellung des Axialspiels und Montage des Sprengrings sind dann diese Komponenten wieder zu montieren. Der geschilderte, zusätzliche Demontage- und Montageschritte sowie die Spieleinstellung umfassende Montageaufwand hat entsprechend hohe Kosten beim Kraftfahrzeughersteller zur Folge. Da das Axialspiel gemessen und eingestellt werden muss, besteht die Gefahr von Fehleinstellungen aufgrund von Messfehlern bzw. falscher Wahl einer Ausgleichsscheibe. Insgesamt muss festgestellt werden, dass eine relativ große Gefahr einer Fehlmontage bzw. Fehleinstellung des Axialspiels beim Kraftfahrzeughersteller besteht, was auch im Hinblick auf hieraus resultierende Gewährleistungsansprüche problematisch ist. Auch ist allein schon der Zeitaufwand für die aufwendige Montage und Justage ein wesentlicher Kostenfaktor, beispielsweise aufgrund einer entsprechend verlängerten Taktzeit am Fertigungsband.

Demgegenüber liegt der Erfindung die Aufgabe zugrunde, die Montage einer Kupplungseinrichtung der eingangs genannten Art im Antriebsstrang zu vereinfachen und - soweit als möglich - ohne Einstellung eines Axialspiels im Hinblick auf einen Längenausgleich bei Wärmeausdehnung auszukommen.

Zur Lösung dieser Aufgabe wird für die eingangs genannte Kombination vorgeschlagen, dass zumindest ein Bestandteil der Kombination wenigstens eine (ggf. zusätzliche oder gesonderte) Axial-Abstützungseinrichtung aufweist, dass die Kupplungseinrichtung als eine fertige Baueinheit zwischen der Antriebseinheit und dem Getriebe montierbar und - gegebenenfalls unter Vermittlung der wenigstens einen Axial-Abstützungseinrichtung - axial positionierbar ist durch axiale Abstützung in Richtung Antriebseinheit und in Richtung Getriebe, ohne dass ein oder mehrere Teile der Baueinheit im Zuge des Montagevorgangs demontiert werden müssen. Für die axiale Abstützung kann vorgesehen sein, dass die Kupplungseinrichtung in Richtung zum Getriebe axial abgestützt oder abstützbar ist und in Richtung zur Antriebseinheit axial abgestützt oder abstützbar ist. Bevorzugt ist, dass es sich bei der axialen Abstützung der Kupplungseinrichtung in Richtung zum Getriebe oder/und in Richtung zur Antriebseinheit um eine elastische, durch wenigstens ein elastisches oder federndes Element vermittelte Abstützung handelt.

Im Rahmen des Erfindungsvorschlags sind verschiedenste Ausgestaltungen möglich, die für sich alleine oder in Kombination miteinander realisiert sein können. Besonders bevorzugt ist, dass die Baueinheit getriebeseitig an- oder aufsteckbar ist, so dass die Baueinheit bzw. Kupplungseinrichtung einfach montiert werden kann, beispielsweise am Band, von Hand oder maschinell. Beim An- bzw. Aufstecken wird vorzugsweise eine Sicherung zur axialen Sicherung der Baueinheit aktiviert, wobei eine selbsttätige Aktivierung der Sicherung besonders bevorzugt ist.

Die Sicherung kann eine Einschnapp- oder Rastverbindung umfassen, die vorzugsweise ohne Einsatz eines Werkzeugs herstellbar ist und eine Haltefunktion für die Kupplung ausübt. Die Einschnapp- oder Rastverbindung sollte für Reparaturzwecke oder dergleichen lösbar sein, ggf. unter Zuhilfenahme eines Werkzeugs.

Nach dem An- oder Aufstecken oder - vorzugsweise - beim An- oder Aufstecken kann eine axiale Vorspannung auf wenigstens ein Bauteil der Kupplungseinrichtung aufbringbar sein, dass das Bauteil und damit vorzugsweise weitere Bauteile der Kupplungseinrichtung, ggf. die gesamte Baueinheit, in Richtung zum Getriebe vorspannt, um eine definierte Einbaulage zu gewährleisten. Die Baueinheit kann dabei in Richtung zum Getriebe über wenigstens eine, vorzugsweise nur eine der Getriebeeingangswellen abgestützt oder abstützbar sein.

Den letzten Gedanken verallgemeinernd kann die Kupplungseinrichtung bzw. die Baueinheit in Richtung zum Getriebe oder/und in Richtung zur Antriebseinheit unter Vermittlung wenigstens einer der Getriebeeingangswellen axial abgestützt oder abstützbar sein. Bei einer besonders relevanten Konstruktion sind die Getriebeeingangswellen radial geschachtelt, und es kann eine Axialabstützung der Kupplungseinrichtung in Richtung zum Getriebe oder/und in Richtung zur Antriebseinheit an einer radial inneren oder/und einer radial äußeren Getriebeeingangswelle vorgesehen sein. Eine andere Möglichkeit ist, dass die Kupplungseinrichtung in Richtung zum Getriebe oder/und in Richtung zur Antriebseinheit unter Vermittlung einer radial innerhalb geschachtelten Getriebeeingangswellen verlaufenden Ölpumpen-Antriebswelle axial abgestützt oder abstützbar ist. Noch eine weitere Möglichkeit ist, dass die Kupplungseinrichtung in Richtung zum Getriebe oder/und in Richtung zur Antriebseinheit unter Vermittlung der Abtriebswelle der Antriebseinheit axial abgestützt oder abstützbar ist.

Weist die Kombination eine von der Kupplungseinrichtung gesonderte Torsionsschwingungsdämpferanordnung auf, die im Antriebsstrang zwischen der Kupplungseinrichtung und der Antriebseinheit angeordnet ist, so kann die Kupplungseinrichtung in Richtung zum Getriebe oder/und in Richtung zur Antriebseinheit unter Vermittlung der Torsionsschwingungsdämpferanordnung axial abgestützt oder abstützbar sein. Es sollte aber erwähnt werden, dass eine derartige Torsionsschwingungsdämpferanordnung kein zwingender Bestandteil der Kombination bzw. des hieraus aufgebauten Antriebsstrangs ist. So kann beispielsweise die Kupplungseinrichtung eine darin integrierte Torsionsschwingungsdämpferanordnung aufweisen.

Bei herkömmlichen Antriebssträngen weist das Getriebe in der Regel eine Getriebegehäuseglocke auf, die einen Aufnahmeraum für eine Kupplung definiert. Ein derartiger Aufnahmeraum für die Kupplungseinrichtung kann auch im Falle der erfindungsgemäßen Kombination vorgesehen sein. Die Kupplungseinrichtung kann dann in Richtung zum Getriebe oder/und in Richtung zur Antriebseinheit unter Vermittlung der Getriebegehäuseglocke axial abgestützt oder abstützbar sein.

Beispielsweise im Falle einer nasslaufenden Kupplungseinrichtung kann die Kombination eine ggf. deckelartige Verschlusswandung aufweisen, die eine Öffnung für ein einer Eingangsseite der Kupplungseinrichtung zugeordnetes Momentenübertragungsglied, ggf. Eingangsnabe oder Eingangswelle, der Kupplungseinrichtung aufweist und in oder an der Getriebegehäuseglocke montiert oder montierbar ist, um den Aufnahmeraum zu verschließen. In diesem Fall kann die Kupplungseinrichtung in Richtung zum Getriebe oder/und in Richtung zur Antriebseinheit unter Vermittlung der Verschlusswandung axial abgestützt oder abstützbar sein.

Betreffend die schon angesprochene Axialabstützung der Kupplungseinrichtung in Richtung zum Getriebe oder/und in Richtung zur Antriebseinheit an wenigstens einer der Getriebeeingangswellen wird insbesondere daran gedacht, dass diese Axialabstützung unter Vermittlung einer Ausgangsseite der ersten Kupplungsanordnung oder/und eine Ausgangsseite der zweiten Kupplungsanordnung erfolgt. Dabei kann eine Axialabstützung der Kupplungseinrichtung in Richtung zum Getriebe oder/und in Richtung zur Antriebseinheit derart vorgesehen sein, dass die Ausgangsseite der betreffenden Kupplungsanordnung in Richtung zum Getriebe direkt oder indirekt an der der zweiten Kupplungsanordnung zugeordneten Getriebeeingangswelle oder/und in Richtung zur Antriebseinheit direkt oder indirekt an der der ersten Kupplungsanordnung zugeordneten Getriebeeingangswelle abgestützt ist, oder die Ausgangsseite der betreffenden Kupplungsanordnung in Richtung zum Getriebe direkt oder indirekt an der der ersten Kupplungsanordnung zugeordneten Getriebeeingangswelle oder/und in Richtung zur Antriebseinheit direkt oder indirekt an der der zweiten Kupplungsanordnung zugeordneten Getriebeeingangswelle abgestützt ist, oder die Ausgangsseite der betreffenden Kupplungsanordnung in Richtung zum Getriebe und in Richtung zur Antriebseinheit direkt oder indirekt an der dieser Kupplungsanordnung zugeordneten Getriebeeingangswelle abgestützt ist. Im Falle einer Axialabstützung in beiden Richtungen ist von den vorstehend genannten drei Möglichkeiten die letzte bevorzugt, da dann auf das Vorsehen eines definierten Axialspiels zum Aufnehmen von Temperaturgangbedingten Längenänderungen der Getriebeeingangswellen und relativen Verschiebungen derselben aufgrund von wechselnden Durchbiegungen der Wellen in der Regel verzichtet werden kann.

Neben der Möglichkeit, die Kupplungseinrichtung über wenigstens eine der Ausgangsseiten der Kupplungsanordnungen axial abzustützen, besteht auch die Möglichkeit, eine Axialabstützung der Kupplungseinrichtung in Richtung zum Getriebe oder/und in Richtung zur Antriebseinheit unter Vermittlung einer den Kupplungsanordnungen gemeinsamen Eingangsseite, ggf. Eingangsnabe oder Eingangswelle, der Kupplungseinrichtung vorzusehen. Diese Abstützung kann direkt oder indirekt an wenigstens einer der Getriebeeingangswellen oder/und an der Ölpumpen-Antriebswelle (sofern vorgesehen) oder/und an der Torsionsschwingungsdämpferanordnung (sofern vorgesehen) oder/und an der Abtriebswelle der Antriebseinheit oder/und an der Verschlusswandung (sofern vorgesehen) oder/und an der Getriebegehäuseglocke erfolgen. Eine weitere Möglichkeit ist, eine Axialabstützung der Kupplungseinrichtung in Richtung zum Getriebe oder/und in Richtung zur Antriebseinheit unter Vermittlung der Eingangsseite, ggf. einem Lamellenträger, einer der Kupplungsanordnungen vorzusehen, und zwar beispielsweise direkt oder indirekt an der Verschlusswandung oder/und an der Getriebegehäuseglocke. Es wird insbesondere daran gedacht, dass ein weitere Kupplungseinrichtungsteile umschließender Außenlamellenträger direkt oder indirekt unter Vermittlung nur einer Lager- oder/und Federanordnung an der Getriebegehäuseglocke axial abgestützt oder abstützbar ist. Ist ein rotierendes Kupplungsgehäuse vorgesehen, das den Außenlamellenträger aufweisen kann oder gegenüber dem Außenlamellenträger gesondert sein kann, so kann das Kupplungsgehäuse direkt oder indirekt unter Vermittlung einer Lager- oder/und Federanordnung an der Getriebegehäuseglocke axial abgestützt oder abstützbar sein.

Betreffend die Abstützung der Kupplungseinrichtung an der Verschlusswandung wird vorgeschlagen, dass ein die Eingangsseite der einen Kupplungsanordnung, ggf. den Außenlamellenträger einer radial äußeren der Kupplungsanordnungen an einer Eingangsseite, ggf. Eingangsnabe oder Eingangswelle, der Kupplungseinrichtung ankoppelndes Mitnahmeblech direkt oder unter Vermittlung nur einer Lager- oder/und Federanordnung an der Verschlusswandung axial abgestützt oder abstützbar ist, und zwar vorzugsweise in Nachbarschaft zu oder integriert mit einer Dichtungs- oder/und Lageranordnung, die zwischen der Eingangsseite der Kupplungseinrichtung und einem die Öffnung begrenzenden Wandungsrand wirksam ist.

Die Möglichkeit, eine axiale Vorspannung für die Kupplungseinrichtung vorzusehen, wurde schon angesprochen. Bevorzugt ist eine elastische Einrichtung, ggf. Federanordnung, vorgesehen, die elastische Vorspann- oder Rückstellkräfte in axialer Richtung auf die Kupplungseinrichtung als Ganzes oder wenigstens eine Komponente derselben aufbringt, um die Kupplungseinrichtung axial zu positionieren oder/und die Kupplungseinrichtung gegen eine getriebeseitige Abstützanordnung (ggf. wenigstens eine der Getriebeeingangswellen) vorzuspannen.

Im Zusammenhang mit dem oben angesprochenen An- bzw. Aufstecken der Baueinheit kann vorgesehen sein, dass wenigstens eine der Baueinheit zugehörige Komponente der Kupplungseinrichtung, die eine Radialabstützung für die Kupplungseinrichtung als Ganzes oder wenigstens für eine Ausgangsseite einer der Kupplungsanordnungen an einer getriebeseitigen Drehwelle vermittelt oder/und eine Drehverbindung mit dieser Drehwelle herstellt, bei der Montage der Kupplungseinrichtung auf die Drehwelle aufschiebbar ist und nach dem Aufschieben an der Drehwelle in einer oder in beiden Axialrichtungen abgestützt oder abstützbar, vorzugsweise elastisch abgestützt oder abstützbar, ist, ohne dass eine Demontage einer oder mehrerer Komponenten der Baueinheit erforderlich ist. Dabei kann zwischen der Komponente der Kupplungseinrichtung und der Drehwelle eine Einschnapp- oder Rastverbindung herstellbar sein, die die Axialabstützung sowie ggf. eine elastische Vorspannung in axialer Richtung vermittelt. Zur Herstellung der Rast- oder Einschnappverbindung kann wenigstens ein gegenüber der Komponente oder der Drehwelle gesondertes Koppelglied vorgesehen sein, das nach dem Aufschieben simultan in axial begrenzte Ausnehmungen der Komponente und der Drehwelle eingreift und zur Ermöglichung des Aufschiebens in eine zugeordnete Ausnehmung der Komponente oder der Drehwelle eintauchbar ist. Hierzu kann die Komponente oder die Drehwelle wenigstens eine Auflauf-Schrägfläche aufweisen, die zum Aufschieben auf das Koppelglied wirkt und dieses eintaucht.

Betreffend die Ausbildung des Koppelglieds im einzelnen sind verschiedenste Ausgestaltungen denkbar. Das Koppelglied kann beispielsweise von einem Koppelbügel oder Koppelring gebildet sein, der sich zumindest um einen Teil des Umfangs der Drehwelle erstreckt. Eine Möglichkeit ist, dass das Koppelglied in der Art eines Sprengrings ausgeführt ist. Eine andere Möglichkeit ist, dass das Koppelglied von einem Drahtring oder Drahtbügel gebildet ist, der mehrere gebogene Abschnitte mit zueinander entgegengesetztem Biegesinn oder/und mehrere sich streifend, vorzugsweise zumindest näherungsweise tangential zu einem Umfang der Komponente oder/und einem Umfang der Drehwelle erstreckende Abschnitte aufweist.

Die genannte Einschnapp- oder Rastverbindung ist nur eine von diversen Möglichkeiten. Eine weitere Möglichkeit ist, dass die Kombination eine Abstützanordnung aufweist, die nach dem Aufschieben der Komponente auf die Drehwelle in Zuordnung zur Komponente und zur Drehwelle montierbar ist und im montierten Zustand die Axialabstützung der Komponente an der Drehwelle in zumindest einer Axialrichtung vermittelt. Die Abstützanordnung kann eine einerseits an der Komponente und andererseits an der Drehwelle oder einem daran angebrachten Halteglied, ggf. Sprengring, angreifende Elastik- oder Federanordnung umfassen. Betreffend die Federanordnung wird vorgeschlagen, dass diese wenigstens einen Federring umfassen.

Die Drehwelle kann eine/die radial äußere Getriebeeingangswelle der radial geschachtelten Getriebeeingangswellen sein. In diesem Fall kann die aufschiebbare Komponente eine dieser Getriebeeingangswelle zugeordnete Koppelnabe der Ausgangsseite der dieser Getriebeeingangswellen zugeordneten Kupplungsanordnung sein. Ferner ist es möglich, dass die Drehwelle eine/die radial innere Getriebeeingangswelle der radial geschachtelten Getriebeeingangswellen ist. In diesem Fall kann die aufschiebbare Komponente eine dieser Getriebeeingangswelle zugeordnete Koppelnabe der Ausgangsseite der dieser Getriebeeingangswelle zugeordneten Kupplungsanordnung sein.

Ist eine mechanisch unter Vermittlung der Antriebseinheit angetriebene Ölpumpe vorgesehen, so kann eine den Antrieb vermittelnde Ölpumpen-Antriebswelle radial in den radial geschachtelten Getriebeeingangswellen verlaufen. In diesem Fall kann diese Ölpumpen-Antriebswelle die vorstehend behandelte Drehwelle bilden, und es kann vorgesehen sein, dass die aufschiebbare Komponente eine Eingangsnabe oder Eingangswelle der Kupplungseinrichtung ist, die den Eingangsseiten beider Kupplungsanordnungen zugeordnet ist. Diese Eingangsnabe oder Eingangswelle kann einerseits zur direkten oder indirekten Ankopplung der Abriebswelle der Antriebseinheit dienen, ggf. über eine/die Torsionsschwingungsdämpferanordnung, sowie andererseits die Antriebsverbindung zwischen der Ölpumpen-Antriebswelle und der Abtriebswelle der Antriebseinheit herstellen.

Es kann generell eine Abdichtungs- oder Verschlussanordnung vorgesehen sein, die einen Ölflussweg zwischen der Ölpumpen-Antriebswelle und der Eingangsnabe oder Eingangswelle in Richtung zur Antriebseinheit abdichtet oder verschließt. Die Abdichtungs- oder Verschlussanordnung ist vorzugsweise im Zuge der Montage der Abstützanordnung montierbar oder/und zumindest teilweise von der Abstützanordnung selbst gebildet.

Eine bevorzugte, mit anderen der vorangehend und nachfolgend angesprochenen Ausgestaltungsmöglichkeiten kombinierbare Ausgestaltung zeichnet sich dadurch aus, dass eine/die Komponente auf eine sich durch wenigstens eine andere, als Hohlwelle ausgebildete Drehwelle erstreckende Drehwelle aufschiebbar und an dieser Drehwelle in Richtung zum Getriebe abstützbar ist, und dass einem antriebseinheitsseitige Ende der anderen Drehwelle axiales Bewegungs- oder/und Längenausdehnungsspiel in Richtung zur Antriebseinheit verbleibt. Durch diese Maßnahme wird auf einfache Weise für erforderlichen "Spielraum" für das Ende der anderen Drehwelle gesorgt, so dass die aufwendige Einstellung eines Axialspiels entbehrlich ist. Es kann ein zwischen der Komponente und der Drehwelle wirksames Vermittlungsglied vorgesehen sein, das die Abstützung in Richtung zum Getriebe vermittelt. Als Vermittlungsglied kann ein Ringoder Bügelelement verwendet werden, das einerseits in eine Nut der Drehwelle oder der Komponente eingreift oder mit dieser in Eingriff bringbar ist und andererseits gegen eine Anschlag-Ringfläche der Komponente bzw. der Drehwelle anliegt oder in Anlage bringbar ist oder das beidseitig an einer jeweiligen Anschlag-Ringfläche der Drehwelle und der Komponente anliegt oder in Anlage bringbar ist. Im Hinblick auf eine einfache Montage kann das Ring- oder Bügelelement axial auf die Drehwelle aufschiebbar sein. Vorzugsweise ist das Ring- oder Bügelelement aus Runddraht hergestellt, um an der ggf. hochbelasteten Welle soweit als möglich keine Spannungsspitzen durch scharfkantige Ecken oder Kerbwirkungen zu erzeugen. In diesem Zusammenhang ist es zweckmäßig, für die Nut oder/und die Anschlag-Ringfläche bzw. wenigstens eine der Anschlag-Ringflächen eine Abrundung entsprechend einem Querschnitt des Ring- oder Bügelelements vorzusehen.

Nach einem anderen Ansatz betreffend die Axialabstützung in Richtung zur Antriebseinheit unter Vermittlung von deren Abtriebswelle wird vorgeschlagen, dass eine zwischen einem Koppelende einer Abtriebswelle der Antriebseinheit und einer Eingangsseite, ggf. Eingangsnabe oder Eingangswelle, der Kupplungseinrichtung wirksame, vorzugsweise elastische Axialabstützungsanordnung vorgesehen ist, die am Koppelende oder/und an der Eingangsseite radial gesichert oder sicherbar ist und wenigstens eine ballige oder kugelige Kontaktfläche aufweist, die an einer zugeordneten Gegen-Kontaktfläche des Koppelendes oder der Eingangsseite anliegt oder in Anlage bringbar ist. Erfolgt die Momentenübertragung zwischen der Abtriebswelle und der Eingangsseite über eine Torsionsschwingungsdämpferanordnung (ggf. vom Zwei-Massen-Schwungrad-Typ), so kann durch die ballige oder kugelige Ausgestaltung der Kontaktfläche auf einfache Weise erreicht werden, dass der Kontakt zwischen der Kontaktfläche und der Gegen-Kontaktfläche bei einem geringen Radius in Bezug auf die maßgebliche Drehwelle erfolgt, also ein großer Anlagedurchmesser vermieden wird. Dies ist im Hinblick auf die durch den Torsionsschwingungsdämpfer bedingte Relativverdrehung zwischen Kontaktfläche und Gegen-Kontaktfläche vorteilhaft, um beispielsweise die Reibung und den Verschleiß zu minimieren.

Die Gegen-Kontaktfläche kann eine zentrale Axial-Ausnehmung der Koppelendes bzw. der Eingangsseite axial begrenzen, wobei die Gegen-Kontaktfläche vorzugsweise ballig oder kegelförmig ist. Die Kontaktfläche und die Gegen-Kontaktfläche können vorteilhaft bezogen auf eine Rotationsachse der Eingangsseite bzw. der Abtriebswelle jeweils im Wesentlichen rotationssymmetrisch sein und ggf. eine gewisse Selbstzentrierungsfunktion relativ zueinander ausüben.

Betreffend die Axialabstützungsanordnung wird vorgeschlagen, dass diese ein zumindest bereichsweise balliges oder kugeliges Abstützelement sowie ggf. eine demgegenüber gesonderte Feder- oder Elastikanordnung umfasst. Die Feder- oder Elastikanordnung kann wenigstens eine Tellerfeder oder wenigstens ein Tellerfederpaket umfassen. Das Abstützelement kann auch selbst axial elastisch oder federnd ausgeführt sein; in diesem Fall kann auf eine gesonderte Feder- und Elastikanordnung unter Umständen verzichtet werden.

Soweit eine Abdichtung eines Nassraums oder/und Ölkanals der Kupplungseinrichtung in Richtung zur Antriebseinheit erforderlich ist, kann das Abstützelement eine Abdichtfunktion diesbezüglich erfüllen. Auf gesonderte Dichtungselemente kann dann eventuell verzichtet werden.

Betreffend die schon mehrfach angesprochene Abstützung in Richtung zur Antriebseinheit wird nach einem anderen Ansatz vorgeschlagen, dass die Eingangseite, ggf. Eingangsnabe oder Eingangswelle, der Kupplungseinrichtung vermittels einer Federanordnung an einer Ausgangsseite einer/der Torsionsschwingungsdämpferanordnung oder eines an einer/der Abtriebswelle der Antriebseinheit angekoppelten, Momentenübertragungsglieds axial abgestützt oder abstützbar ist. Die Federanordnung kann beispielsweise von wenigstens einem Federring gebildet sein, beispielsweise in der Art einer Tellerfeder. Die Eingangsseite einerseits und die Ausgangsseite bzw. das Momentenübertragungsglied andererseits können vermittels Mitnahmeformationen in gegenseitigem Drehmitnahmeeingriff stehen oder bringbar sein, wobei die Mitnahmeformationen beispielsweise eine Steckverzahnung bilden können.

Die Erfindung betrifft ferner einen Kraftfahrzeug-Antriebsstrang, der aus einer erfindungsgemäßen Kombination aufgebaut ist, sowie eine Mehrfach-Kupplungseinrichtung, ggf. Doppel-Kupplungseinrichtung, die als Teil einer erfindungsgemäßen Kombination verwendbar ist. Für eine Mehrfach-Kupplungseinrichtung, ggf. Doppel-Kupplungseinrichtung für die Anordnung in einem Kraftfahrzeug-Antriebsstrang zwischen einer Antriebseinheit und einem Getriebe, welche Kupplungseinrichtung eine einer ersten Getriebeeingangswelle des Getriebes zugeordnete erste Kupplungsanordnung und eine einer zweiten Getriebeeingangswelle des Getriebes zugeordnete zweite Kupplungsanordnung aufweist zur Momentenübertragung zwischen der Antriebseinheit und dem Getriebe, wird insbesondere vorgeschlagen, dass die Kupplungseinrichtung in Form einer vorgefertigten Baueinheit vorliegt und als fertige Baueinheit zwischen der Antriebseinheit und dem Getriebe montierbar und durch axiale Abstützung in Richtung Antriebseinheit und Richtung Getriebe axial positionierbar ist, ohne dass ein oder mehrere Teile der Baueinheit im Zuge des Montagevorgangs demontiert werden müssen, wobei wenigstens eine gegenüber der Baueinheit gesonderte Axial-Abstützungseinrichtung vorgesehen oder/und wenigstens eine Komponente der Baueinheit mit einer Axial-Abstützungseinrichtung ausgeführt ist, die eine Axialabstützung für die Baueinheit in Richtung zum Getriebe oder/und in Richtung zur Antriebseinheit vermittelt, wobei die gesonderte Axial-Abstützungseinrichtung zumindest teilweise gegenüber der Baueinheit getriebeseitig vormontierbar oder ggf. zumindest teilweise gegenüber der Baueinheit getriebeseitig oder/und antriebseinheitsseitig nachmontierbar ist.

Die Kupplungseinrichtung kann entsprechend der Kupplungseinrichtung der erfindungsgemäßen Kombination ausgeführt sein.

Die Erfindung wird im Folgenden anhand von in den Figuren gezeigten Ausführungsbeispielen näher erläutert.
- Fig. 1: zeigt in einer teilgeschnittenen Darstellung eine in einem Antriebsstrang eines Kraftfahrzeugs zwischen einem Getriebe und einer Antriebseinheit angeordnete Doppelkupplung mit zwei nasslaufenden Lamellen-Kupplungsanordnungen, die eine Ausführungsvariante einer in offengelegten deutschen Patentanmeldungen offenbarten Doppelkupplungskonstruktion der Anmelderin entspricht und einen Ausgangspunkt für die Erfindung darstellt, und zeigt in Teilfigur 1b ein Detail der Fig. 1a betreffend die Axialabstützung der Doppelkupplung in Richtung zur Antriebseinheit an einer Getriebeeingangswelle.
- Fig. 2: zeigt ein erstes Ausführungsbeispiel eines erfindungsgemäßen Antriebsstrangs, bei der eine Axialabstützung der Doppelkupplung in Richtung zur Antriebseinheit an einer Antriebswelle der Antriebseinheit vorgesehen ist.
- Fig. 3: zeigt ein zweites Ausführungsbeispiel eines erfindungsgemäßen Antriebsstrangs, bei dem die Doppelkupplung in Richtung zur Antriebseinheit ebenfalls an der Abtriebswelle der Antriebseinheit abgestützt ist.
- Fig. 4: zeigt in den Teilfiguren a), b) und c) verschiedenartige Federanordnungen, die bei einem erfindungsgemäßen Antriebsstrang entsprechend dem Ansatz der Fig. 2 und 3 zum Einsatz kommen könnten, um eine elastische Abstützung für die Doppelkupplung in Richtung zur Antriebseinheit an deren Abtriebswelle vorzusehen.
- Fig. 5: zeigt eine Ausführungsvariante der Anordnung gemäß Fig. 2.
- Fig. 6: zeigt eine Ausführungsvariante der Anordnung gemäß Fig. 3.
- Fig. 7: zeigt ein weiteres Ausführungsbeispiel eines erfindungsgemäßen Antriebsstrangs, bei dem die Doppelkupplung in Richtung zur Antriebseinheit unter Vermittlung deren Abtriebswelle elastisch abgestützt ist.
- Fig. 8: zeigt ein Ausführungsbeispiel eines erfindungsgemäßen Antriebsstrangs, bei dem die Doppelkupplung in Richtung zur Antriebseinheit an einer zwischen der Doppelkupplung und der Antriebseinheit angeordneten Torsionsschwingungsdämpferanordnung elastisch abgestützt ist.
- Fig. 9: zeigt in der Teilfigur 9a ein weiteres Ausführungsbeispiel eines erfindungsgemäßen Antriebsstrangs, bei dem die Doppelkupplung unter Vermittlung der Ausgangsseite einer der Dupplungsanordnungen an einer zugeordneten Getriebeeingangswelle in Richtung zur Antriebseinheit axial abgestützt ist, und zeigt in Fig. 9b einen Schnitt durch die Anordnung der Fig. 9a nach Linie B-B.
- Fig. 10: zeigt in der Teilfigur 10a ein weiteres Ausführungsbeispiel eines erfindungsgemäßen Antriebsstrangs mit einer unter Vermittlung einer Ausgangsseite einer der Kupplungsanordnungen an einer zugeordneten Getriebeeingangswelle axial in Richtung zur Antriebseinheit abgestützten Doppelkupplung, und in Teilfigur 10b einen Schnitt durch die Anordnung der Fig. 10a nach Linie B-B.
- Fig. 11: zeigt eine Ausführungsvariante der Anordnung gemäß Fig. 9.
- Fig. 12: zeigt eine Ausführungsvariante der Anordnung gemäß Fig. 10.
- Fig. 13: zeigt in der Teilfigur 13a ein weiteres Ausführungsbeispiel mit einer Doppelkupplung, die unter Vermittlung der Ausgangsseite einer ihrer Kupplungsanordnungen an einer zugeordneten Getriebeeingangswelle in Richtung zur Antriebseinheit axial abgestützt ist, wobei in der Teilfigur 13b eine die Abstützung deutlicher zeigende Detailvergrößerung ist.
- Fig. 14: zeigt ein Ausführungsbeispiel eines erfindungsgemäßen Antriebsstrangs, bei dem eine elastische Axialabstützung der Doppelkupplung in Richtung zur Antriebseinheit an einer Ölpumpen-Antriebswelle vorgesehen ist.
- Fig. 15: zeigt ein Detail einer Ausführungsvariante der Anordnung der Fig. 14.
- Fig. 16: zeigt eine weitere Ausführungsvariante der Anordnung der Fig. 14.
- Fig. 17: zeigt ein Ausführungsbeispiel eines erfindungsgemäßen Antriebsstrangs, bei dem die Doppelkupplung an einer deckelartigen Verschlusswandung einer Getriebegehäuseglocke in Richtung zur Antriebseinheit elastisch abgestützt ist.
- Fig. 18: zeigt ein Ausführungsbeispiel eines erfindungsgemäßen Antriebsstrangs, bei dem die Doppelkupplung vermittels deren radial äußeren Außenlamellenträger an der Getriebegehäuseglocke in Richtung zur Antriebseinheit elastisch abgestützt ist.

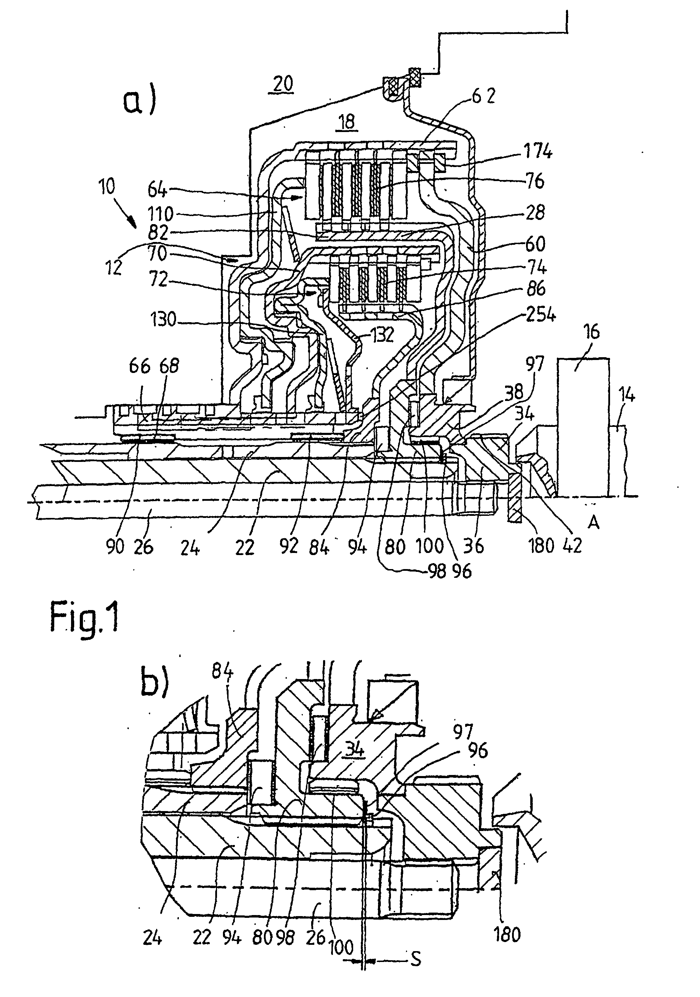

Fig. 1 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 1 nur eine Abtriebswelle 14, ggf. Kurbelwelle 14, mit einem zur Ankopplung eines nicht dargestellten Torsionsschwingungsdämpfers dienenden Koppelende 16 dargestellt. Das Getriebe ist in Fig. 1 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle 26 angeordnet, die zum Antrieb einer getriebeseitigen, in Fig. 1 nicht dargestellten Ölpumpe dient. Ein Verschluss- oder Dichtungsteil 180 sorgt für eine Abdichtung einer Axialbohrung der Eingangsnabe 36 in Richtung zur Antriebseinheit.

Als Eingangsseite der Doppelkupplung 12 dient eine Kupplungsnabe 34, die aus Teilen 36 und 38 hergestellt ist und sich durch eine zentrale Öffnung des Deckels 28 in Richtung zur Antriebseinheit erstreckt und über eine Außenverzahnung 42 mit dem nicht dargestellten Torsionsschwingungsdämpfer gekoppelt ist.

An der Nabe 34 ist ein Mitnehmer- oder Trägerblech 60 drehfest angebracht, das zur Drehmomentübertragung zwischen der Nabe 34 und einem Außenlamellenträger 62 einer ersten Lamellen-Kupplungsanordnung 64 dient. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanordnung ringartig umgeben wird. Die beiden Außenlamellenträger 62 und 70 sind durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamellenträger 62 und 70 jeweils als Eingangsseite der Lamellen-Kupplungsanordnung 64 bzw. 72.

Auf der Getriebeeingangswelle 22 ist mittels einer Keilnutenverzahnung oder dergleichen ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung oder dergeichen ein Nabenteil 84 eines Innenlamellenträger 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten bzw. zweiten Lamellen-Kupplungsanordnung 64 bzw. 72.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein der ersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72 angeordnet und an beiden Außenlamellenträgern sowie am Ringteil 66 mittels Dichtungen axial verschiebbar und eine zwischen dem Außenlamellenträger 62 und dem Betätigungskolben 110 ausgebildete Druckkammer sowie eine zwischen dem Betätigungskolben 110 und dem Außenlamellenträger 70 ausgebildete Fliehkraft-Druckausgleichskammer abdichtend geführt. Die Druckkammer steht über einen in dem Ringteil 66 ausgebildeten Druckmediumkan[Bal mit einem zugeordneten hydraulischen Geberzylinder in Verbindung, wobei der Druckmediumskanal über eine das Ringteil 66 aufnehmende, ggf. getriebefeste Anschlusshülse an dem Geberzylinder angeschlossen ist. Die Anschlusshülse und das Ringteil 66 bilden eine Drehverbindung.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer sowie eine zwischen dem Betätigungskolben 130 und dem Wandungsteil 132 ausgebildete Fliehkraft-Druckausgleichskammer abdichtend geführt. Die Druckkammer ist über einen weiteren (schon erwähnten) Druckmediumskanal in entsprechender Weise wie die Druckkammer an einem zugeordneten Geberzylinder angeschlossen. Mittels den Geberzylindern kann an den beiden Druckkammern wahlweise (ggf. auch gleichzeitig) ein Betätigungsdruck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Teller- oder Membranfedern, von denen die dem Betätigungskolben 130 zugeordnete Teller- oder Membranfeder in der Fliehkraft-Druckausgleichskammer aufgenommen ist.

Betreffend weitere Einzelheiten und vorteilhafte Ausgestaltungen der Doppelkupplung 12 wird auf die Offenlegungsschriften DE 100 04 179 A1, DE 100 04 186 A1, DE 100 04 189 A1, DE 100 04 190 A1, DE 100 04 195 A1 verwiesen. Es wird hierzu darauf hingewiesen, dass in Fig. 1 der vorliegenden Anmeldung die gleichen Bezugszeichen wie in Fig. 1 dieser zu einer Patentfamilie gehörenden Anmeldungsserie verwendet sind.

Im Folgenden wird näher auf die Art und Weise der Lagerung der Doppelkupplung im Antriebsstrang gemäß Fig. 1 eingegangen. Zur radialen Lagerung des Ringteils 66 dienen zwei Radial-Lagerbaugruppen 90 und 92, die zwischen der radial äußeren Getriebeeingangswelle 24 und dem Ringteil 66 wirksam sind. Die axiale Lagerung des Ringteils 66 erfolgt betreffend eine Abstützung in Richtung zur Antriebseinheit über das Nabenteil 84, ein Axiallager 94, das Nabenteil 80 und einen das Nabenteil 80 an der inneren Getriebeeingagswelle 22 axial sichernden Sprengring 96, wobei zwischen dem Sprengring 96 und dem Nabenteil 80 ggf. einer oder mehrere Ausgleichsscheiben 97 angeordnet sein können, die dazu dienen, ein definiertes Axialspiel einzustellen.

Das Ringteil 38 der Kupplungsnabe 34 ist wiederum über ein Axiallager 98 und ein Radiallager 100 an dem Nabenteil 80 gelagert. In Richtung zum Getriebe ist das Nabenteil 80 über das Axiallager 94 an einem Endabschnitt der radial äußeren Getriebeeingangswelle 24 axial abgestützt. Das Nabenteil 84 kann unmittelbar an einen zugeordneten Anschlag der Getriebeeingangswelle 24 oder unter Vermittlung des Lagers 92 in Richtung zum Getriebe an der Getriebeeingangswelle 24 abgestützt sein. Da das Nabenteil 84 und das Ringteil 66 gegeneinander relativ-verdrehbar sind, kann zwischen diesen Komponenten ein Axiallager vorgesehen sein, sofern nicht das Lager 92 sowohl Axiallager- als auch Radiallagerfunktion hat. Vom letzteren wird in Bezug auf die Konstruktion in der Fig. 1 ausgegangen.

Die Montage der Doppelkupplung 12 gemäß der älteren Konstruktion der Fig. 1 im Antriebsstrang, speziell am Getriebe, kann auf die folgende Weise erfolgen: Eine vormontierte Doppelkupplung 12 wird mit dem Ringteil 66, den Nabenteilen 80 und 84 und der Eingangsnabe 34 auf die Wellenanordnung 22, 24, 26 aufgeschoben. Der Sprengring 97 ist hierzu noch nicht montiert bzw. entfernt. Anschließend wird die Eingangsnabe 34 samt Mitnehmerblech 60 demontiert, wofür der Sicherungs- oder Sprengring 174 zu lösen ist. Hiernach kann man dann zur Einstellung eines axialen Spiels, das temperaturbedingte Längenänderungen der Getriebeeingangswellen und axiale Bewegungen infolge von Durchbiegungen der Getriebeeingangswellen aufnehmen soll, eine oder mehrere Ausgleichsscheiben 97 neben dem Nabenteil 80 auf die Getriebeeingangswelle 22 aufschieben und anschließend den Sprengring 96 montieren. Hiernach muss man dann die Eingangsnabe 34 samt den zugeordneten Lagern 98 und 100 sowie dem an der Eingangsnabe 36 fest angebrachten Mitnehmerblech 60 montieren und durch den Ring 174 am Außenlamellenträger 62 sichern. Die Eingangsnabe 34 samt dem Mitnehmerblech 60 wird dann unter Vermittlung des Ring 74, des Außenlamellenträgers 62, des Ringteils 66, des Lagers 92, des Nabenteils 84, des Axiallagers 94, des Nabenteils 80, der ggf. eingebauten Ausgleichsscheibenanordnung 97 und des Sprengrings 96 ebenfalls durch die Getriebeeingangswelle 22 in Richtung zur Antriebseinheit axial abgestützt.

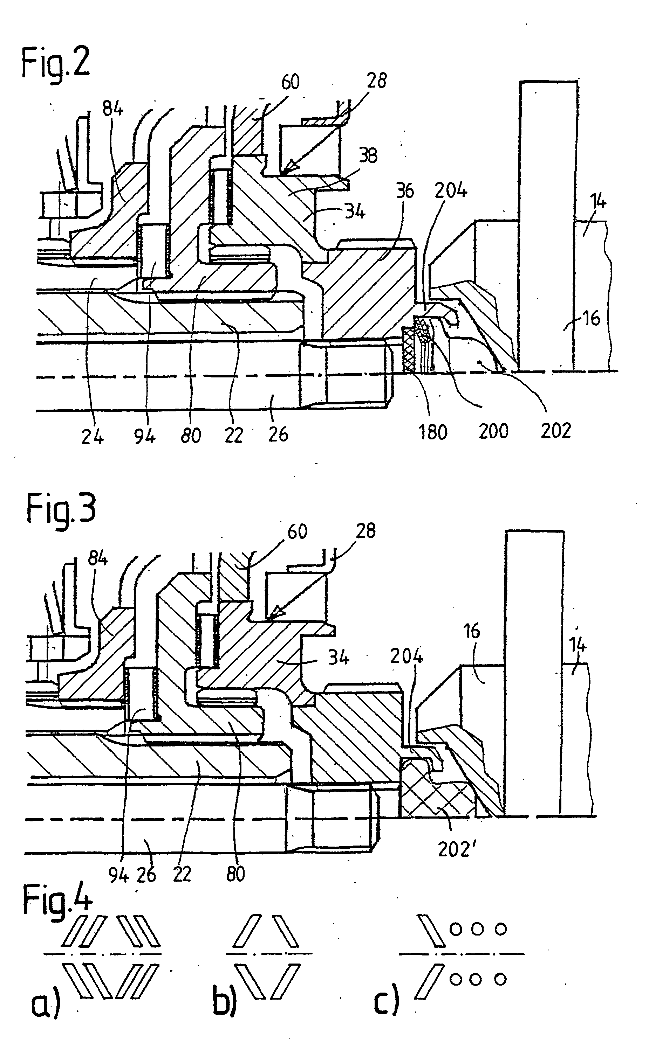

Demgegenüber ist bei der Konstruktion der Fig. 2 auf einen Sprengring entsprechend dem Sprengring 96 zur axialen Abstützung der Doppelkupplung in Richtung zur Antriebseinheit verzichtet. Stattdessen ist eine axiale Abstützung der Eingangsnabe 34 an dem Kurbelwellenflansch 16 unter Vermittlung einer elastischen Abstützungsanordnung vorgesehen, die eine Federanordnung 200 und ein balliges oder kugeliges Abstützelement 202 umfasst, die in einen Haltebund 204 der Eingangsnabe 34 radial innen eingesetzt sind und durch den Haltebund 204 radial und axial auch unabhängig von dem Koppelende 16 gehalten werden.

Das Abstützelement 202 weist eine ballige oder kugelige Kontaktfläche auf, die im fertig zusammengebauten Zustand des Antriebsstrangs an einer Gegen-Kontaktfläche einer axialen Ausnehmung des Koppelendes 16 anliegt. An den Kontaktstellen tritt die Relativ-Drehbewegung des nicht eingezeichneten Torsionsschwingungsdämpfers auf. Es ist deshalb ein kleiner Anlageradius vorgesehen, so dass die auftretende Reibung und der auftretende Verschleiß minimiert werden.

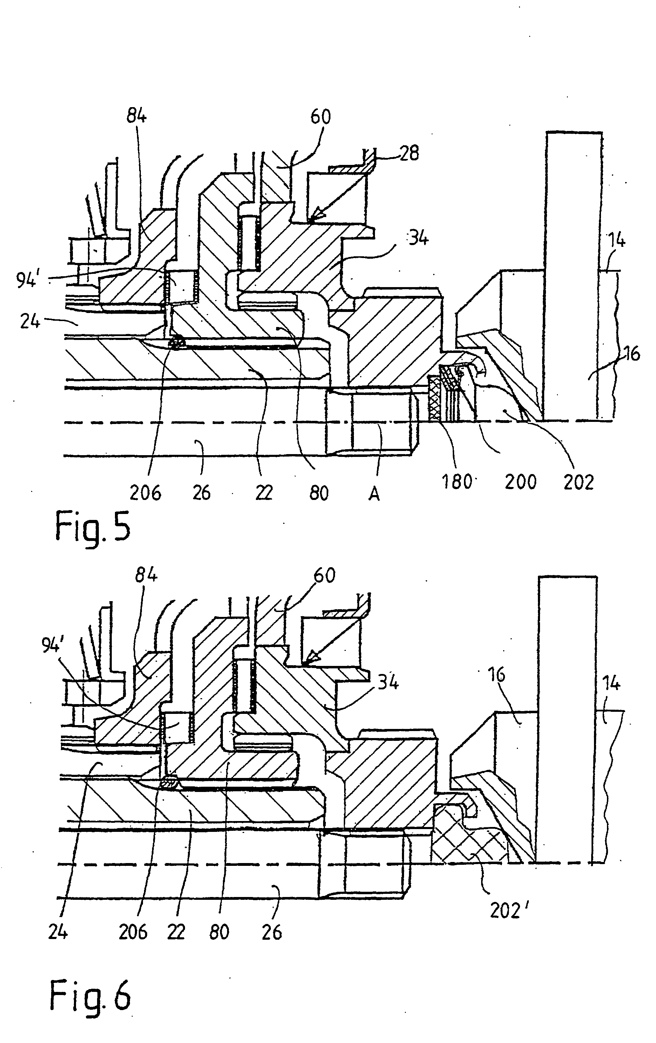

Auf die Einstellung eines Toleranzausgleichs (eines bestimmten axialen Spiels) kann verzichtet werden, da die ggf. von mehreren Tellerfedern gebildete Federanordnung 200 vorgesehen ist, die axiale Längenänderungen bzw. axiale Bewegungen aufnehmen kann. Anstelle von Tellerfedern könnte auch eine Druckfederanordnung oder eine Kombination aus wenigstens einer Tellerfeder und wenigstens einer Druckfeder verwendet werden werden. Fig. 4 zeigt (ohne Anspruch auf Vollständigkeit) einige geeignete Beispiele. Beispielsweise kann man mehrere Tellerfedern gleichsinnig schichten (vgl. Fig. 2), wenigstens zwei Tellerfedern gegensinnig schichten (vgl. Fig. 4b), zwei Tellerfederpakete gegensinnig schichten (vgl. Fig. 4a) oder eine Tellerfeder mit einer Schraubendruckfeder kombinieren (vgl. Fig. 4c). Man kann so im Hinblick auf zu erwartende Kurbelwellenstöße eine optimale Dämpfung erreichen, wobei man ggf. gefettete Tellerfederpakete vorsehen kann.

Gemäß Fig. 2 wird die Axialabstützung für die Doppelkupplung in Richtung zur Antriebseinheit alleine unter Vermittlung der Anordnung 200, 202 erreicht. Ist der Antriebsstrang noch nicht zusammengefügt, so ist die auf die Getriebeeingangswelle aufgesteckte Doppelkupplung in einer vom Getriebe weg weisenden Axialrichtung nicht gesichert. Eine Transportsicherung der Doppelkupplung in der noch offenen Gehäuseglocke kann aber beispielweise durch den Deckel 28 erreicht werden. Soll bei offener Glocke eine Funktionsprüfung erfolgen, so kann die Abstützfunktion der Abtriebswelle, ggf. Kurbelwelle 14, durch ein antreibendes Werkzeug übernommen werden.

Fig. 3 zeigt eine Ausführungsvariante, bei der die Funktion der Federanordnung 200 und des Abstützelements 202 durch ein elastisches Abstützelement 202', beispielsweise ein Gummielement, übernommen ist. Die Montage wird hierdurch besonders einfach, es braucht nur das Abstützelement 202' in den Haltebund 204 eingesetzt werden, bevor der Antriebsstrang zusammengefügt wird. Das Abstützelement 202' kann überdies die Dichtfunktion bzw. Verschlussfunktion des Elements 180 gemäß Fig. 2 übernehmen.

Die Variante gemäß Fig. 3 ist gegenüber der Variante gemäß Fig. 2 ist in mehrerer Hinsicht vorteilhaft. So wird, wie sich aus dem Vorangehenden schon ergibt, die Bauteilevielfalt reduziert und die Montage erleichtert. Überdies erlaubt die Elastizität des elastischen Abstützelements 202' einen gewissen Ausgleich eines Mitten- bzw. Winkelversatzes zwischen der Abtriebswelle 14 einerseits und den Getriebeeingangswellen 22, 24, andererseits.

Bei den Beispielen der Fig. 2 und 3 ist das Nabenteil 80 wie bei der Konstruktion der Fig. 1 über das Axiallager 94 an der radial äußeren Getriebeeingangswelle 24 abgestützt. Da die axialen Positionen der Getriebeeingangswellen 22 und 24 sowohl durch Wärmeausdehnung als auch durch über die Verzahnungen, ggf. Schrägverzahnungen, von den Nabenteilen 80, 84 eingeleitete wechselnde Momente variabel sind, können sich teilweise erhebliche Belastungen für die stützenden bzw. gestützten Bauteile ergeben. Dies ist gemäß den Beispielen der Fig. 5 und 6 dadurch vermieden, dass zwischen dem Nabenteil 80 und der radial äußeren Getriebeeingangswelle 24 ein definiertes axiales Spiel vorgesehen ist. Die Abstützung des Nabenteils 80 in Richtung zum Getriebe erfolgt nun nicht mehr über das Axiallager 94 an der radial äußeren Getriebeeingangswelle 24, sondern kann über ein weniger weit nach radial innen sich erstreckendes Axiallager 94' an dem Nabenteil 84 erfolgen. Eine andere, demgegenüber bevorzugte Variante ist, dass das Axiallager 94' gar keine Axialabstützungsfunktion für das Nabtenteil 80 hat, sondern dass dieses in Richtung zum Getriebe an der Getriebeeingangswelle 22 abgestützt ist. Die Krafteinleitung von dem Nabenteil 80 in die Getriebeeingangswelle 22 kann beispielsweise formschlüssig vermittels eines Abstützungsrings 206 erfolgen, beispielsweise eines Runddrahtrings, der zwischen zugeordneten Abstützungs-Ringflächen des Nabenteils 80 einerseits und der Getriebeeingangswelle 22 wirkt. Die Verwendung eines Rundrahtrings ist insofern besonders vorteilhaft, als dass insbesondere im Falle gerundeter Abstützungs-Ringflächen bzw. ggf. einer gerundeten Nut in der stark belasteten Getriebeeingangswelle 22 auf die Welle wirkende Spannungsspitzen (etwa aufgrund von scharfkantigen Ecken oder Kerbwirkungen) vermieden oder zumindest deutlich reduziert werden.

Das Spiel zwischen der Getriebeeingangswelle 24 und dem Nabenteil 80 ist so bemessen, dass alle zu erwartenden Axialverschiebungen der Welle 24 aufgenommen werden können. Verbleibende Axialbewegungen zwischen der Getriebeeingangswelle 22 und der Abtriebs- bzw. Kurbelwelle 14 werden auf die beschriebene Art und Weise durch die Federanordnung 200 bzw. das Abstützelement 202' elastisch aufgenommen.

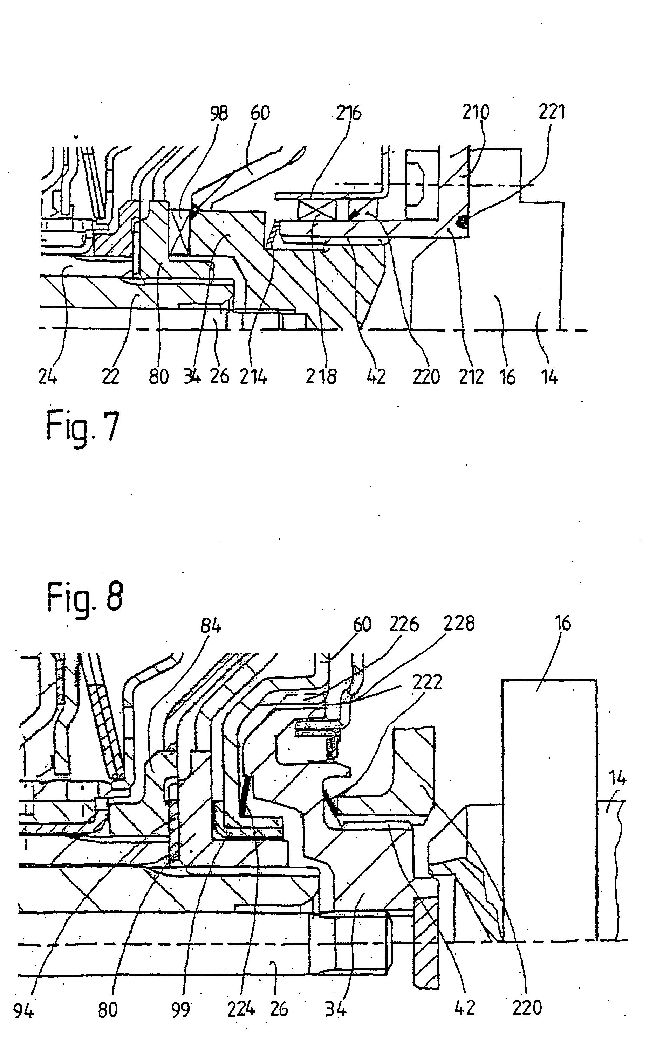

Eine andere Art und Weise der elastischen axialen Abstützung der Doppelkupplung in Richtung zur Antriebseinheit (in der Regel ein Verbrennungsmotor) ist in Fig. 7 dargestellt.

An der-Antriebswelle 14 ist ein ringartiges Koppelelement 210 mit einem Koppelflansch 212 angebracht, der über eine Steckverzahnung 42 an der Kupplungsnabe 34 angekoppelt ist. Eine zwischen der Kupplungsnabe 34 und dem Koppelflansch 212 wirksame Tellerfeder 214 fängt axiale Stöße von Seiten der Abtriebswelle 14 ab bzw. dämpft diese zumindest. Ferner hat die Tellerfeder 214 die schon im Zusammenhang mit den anderen Ausführungsbeispielen beschriebene Vorspann- und Toleranzausgleichsfunktion.

Das Koppelelement 210 kann beispielsweise über eine Flexplatte eine Zusatz-Drehmasse tragen, die zur Einstellung eines mit der Antriebseinheit verbundenen Massenträgheitsmomentsdientund Drehungleichförmigkeiten der Antriebseinheit reduziert. Die Zusatzmasse kann mit einem integrierten Anlasserzahnkranz ausgeführt sein.

Eine Torsionsschwingungsdämpferanordnung kann in die Doppelkupplung selbst integriert sein und beispielsweise zwischen dem Mitnehmerblech 60 und dem Außenlamellenträger der radial äußeren Lamellen-Kupplungsanordnung wirken. Die Doppelkupplung kann mit einem stationären, zusammen mit der Doppelkupplung in die Gehäuseglocke aufgenommenen und einen Nassraum begrenzenden Gehäuse 216 ausgeführt sein, das mittels eines Radiallagers 218 am Koppelflansch 212 gelagert und mittels einer Radialwellendichtung 220 und eines Dichtungsrings 221 in Richtung zur Antriebseinheit abgedichtet ist. Ausführungsbeispiele für entsprechende Doppelkupplungen sind in der am 29.03.2001 eingereichten deutschen Patentanmeldung Nr. 101 15 454.2 der Anmelderin mit dem Titel "Mehrfach-Kupplungseinrichtung, ggf. in Kombination mit einer Torsionsschwingungsdämpferanordnung oder/und einer Elektromaschine" und in der Prioritätsanmeldung (deutsche Patentanmeldung) Nr. 101 15 236.1 vom 28.03.2001 mit dem Titel "Mehrfach-Kupplungseinrichtung, ggf. in Kombination mit einer Torsionsschwingungsdämpferanordnung" offenbart, deren Offenbarung durch Bezugnahme vollständig in die Offenbarung der vorliegenden Anmeldung einbezogen wird.

Ist zwischen der Antriebseinheit und dem Getriebe eine Torsionsschwingungsdämpferanordnung vorgesehen, so kann die Doppelkupplung in Richtung zur Antriebseinheit unter Vermittlung der Torsionsschwingungsdämpferanordnung axial abgestützt sein. Eine entsprechende Konstruktion ist in Fig. 8 gezeigt. Hier ist zwischen der Eingangsnabe 34 der Doppelkupplung und einem Ausgangsnabenteil 220 eines Torsionsschwingungsdämpfers eine Federanordnung 222, beispielsweise eine Tellerfeder, angeordnet, die einerseits für eine Abmilderung bzw. Dämpfung von von der Kurbelwelle 14 herrührenden Stößen und andererseits zusammen mit einer weiteren Federanordnung 224, ggf. Tellerfeder 224, für eine axiale Positionierung der Eingangsnabe 34 sorgt, wobei Toleranzen und axiale Verschiebungen bzw. Positionsänderungen ausgeglichen werden.

Gemäß Fig. 8 sind das Mitnehmerblech 60 und die Eingangsnabe 34 gesonderte, über Verzahnungen 226, 228 in Drehmitnahmeeingriff stehende Teile, und das Mitnehmerblech 60 ist mittels eines Radial- und Axiallagers, ggf. einer Bundbuchse 99, am Nabenteil 80 gelagert. Zur weiteren möglichen Ausgestaltungen der in Fig. 8 gezeigten Konstruktion wird auf den Inhalt der am 02.03.2001 eingereichten deutschen Patentanmeldung Nr. 101 10 145.7 der Anmelderin mit dem Titel "Mehrfach-Kupplungseinrichtung" sowie auf die Prioritätsanmeldung (deutsche Patentanmeldung) Nr. 101 03 306.0 vom 25.01.2001 mit dem Titel "Mehrfach-Kupplungseinrichtung" verwiesen, deren Offenbarung vollständig durch Bezugnahme in die Offenbarung der vorliegenden Anmeldung einbezogen wird.

Bei den vorangehend beschriebenen Ausführungsbeispielen gemäß Fig. 2 bis 8 wurde auf die axiale Abstützung der Doppelkupplung in Richtung zur Antriebseinheit an der Getriebeeingangswellenanordnung verzichtet, insbesondere der Sprengring 96 gemäß Fig. 1 weggelassen, und stattdessen für eine axiale Abstützung der Doppelkupplung in Richtung zur Antriebseinheit unter Vermittlung deren Abtriebswelle, im Falle der Fig. 7 und 8 über das Koppelelement 210 bzw. den Torsionsschwingungsdämpfer, gesorgt. Bei der Montage der Doppelkupplung am Getriebe kann diese einfach als fertige Baueinheit auf die Getriebeeingangswellenanordnung aufgesteckt werden, und es braucht im Gegensatz zur älteren Konstruktion der Fig. 1 kein Bauteil der Baueinheit mehr demontiert werden, um die Axialabstützung in Richtung zur Antriebseinheit zu erreichen, da die abstützenden Komponenten antriebseinheitsseitig von der Eingangsnabe 34 an dieser Eingangsnabe angreifen.

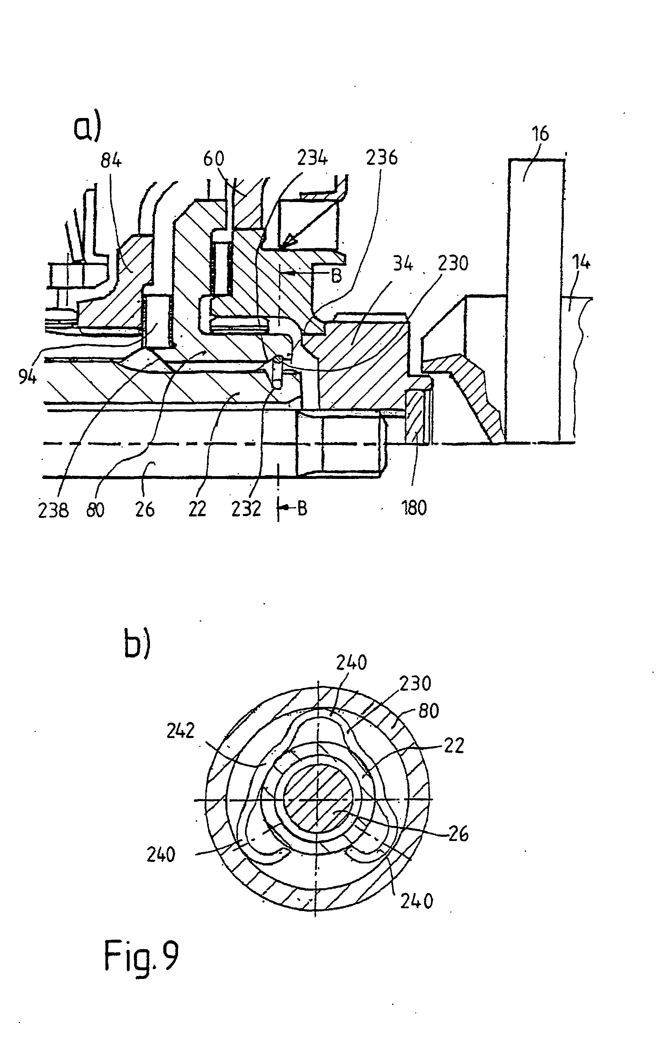

Fig. 9 zeigt eine Lösung, bei der die Doppelkupplung als Baueinheit auf die Getriebeeingangswellenanordnung aufsteckbar und ohne Erfordernis der teilweisen Demontage an der Getriebeeingangswellenanordnung in Richtung zur Antriebseinheit axial abstützbar ist, und zwar auf Basis einer selbsttätig einrastenden oder einschnappenden Axialsicherung, die beim vorliegenden Beispiel ein aus einem geeigneten Draht oder dergleichen gebogenes, federndes Sicherungsglied 230 umfasst, das in einer Ringnut 232 im axialen Endbereich der radial inneren Getriebeeingangswelle 22 eingesetzt ist und im montierten Zustand der Doppelkupplung zwischen eine Vorspannschräge 234 und einen Axialanschlag 236 des Nabenteils 80 eingreift bzw. an der Vorspannschräge 234 angreift.

Das Sicherungsglied 230 wird vor der Montage der Doppelkupplung auf der Getriebeeingangwelle 22 vormontiert. Anschließend kann die komplette Doppelkupplung aufgeschoben werden. Beim Aufschieben wirkt eine Auflaufschräge 238 des Nabenteils 80 auf das Sicherungsglied 230, so dass dieses eine Schwenkbewegung oder/und eine Eintauchbewegung in die Nut 232 macht, wodurch ermöglicht wird, dass das Nabenteil 80 über das Sicherungsglied hinweggeschoben wird.

Die axialen Dimensionierungen sind bevorzugt so, dass im montierten Zustand das Sicherungsglied 230 an der Vorspannschräge 234 unter radialer Vorspannung nach radial außen anliegt und so eine axiale Vorspannkraft auf das Nabenteil 80 und damit auf die gesamte Doppelkupplung in Richtung zum Getriebe ausübt. Der ggf. als Anschlagnase bezeichenbare Axialanschlag 236 dient vor allem als Fliehkraftsicherung, so dass verhindert wird, dass bei großen Drehzahlen das Sicherungsglied in undefinierter Weise außer Eingriff mit der Vorspannschräge 234 gerät.

Durch die durch das Sicherungsglied ausgeübte axiale Vorspannkraft in Richtung zum Getriebe wird auf einfache, ohne aufwendige Einstellung eines Axialspiels auskommende Weise für einen Toleranzausgleich und für die Aufnahme von beispielsweise temperaturbedingten Längenänderungen gesorgt.

Das Sicherungsglied kann auf die in Fig. 9b gezeigte Art und Weise gebogen sein und mehrere (im vorliegenden Falle drei) Ausbuchtungen 240 mit vergleichsweise geringem Biegeradius und dazwischen liegende, näherungsweise sich tangential zur Getriebeeingangswelle 22 erstreckende, vorliegend leicht gebogene Zwischenabschnitte 242 aufweisen. Die gebogenen Abschnitte 240 greifen an der Vorspannschräge 234 des Nabenteils 80 an und die Zwischenabschnitte 242 liegen am Nutboden der Nut 232 an.

Je nachdem, wie stark die Vorspannschräge 234 geneigt ist, wird man zur Demontage der Doppelkupplung entweder nur vergleichsweise starke axiale Zugkräfte weg vom Getriebe ausüben müssen (die Vorspannschräge dient dann als Auflaufschräge, die das Sicherungsglied 230 in die Nut 232 eintaucht) oder man wird die Eingangsnabe 34 samt Mitnehmerscheibe 60 demontieren müssen (vgl. die Ausführungen im Zusammenhang mit Fig. 1; man wird insbesondere den Sicherungsring 174 entfernen müssen), so dass das Sicherungsglied 230 entfernt oder durch ein gesondertes Werkzeug in die Nut 232 eingetaucht werden kann, um anschließend die Doppelkupplung von den Getriebeeingangswellen abzuziehen. Aus Sicherheitsgründen ist es bevorzugt, dass die Vorspannschräge 234 vergleichsweise steil ist, um eine sichere Fixierung der Doppelkupplung am Getriebe und Abstützung derselben in Richtung zur Antriebseinheit zu gewährleisten. Man wir das Erfordernis der Demontage der Eingangsnabe 34 für eine Demontage der Doppelkupplung hierzu ggf. in Kauf nehmen.

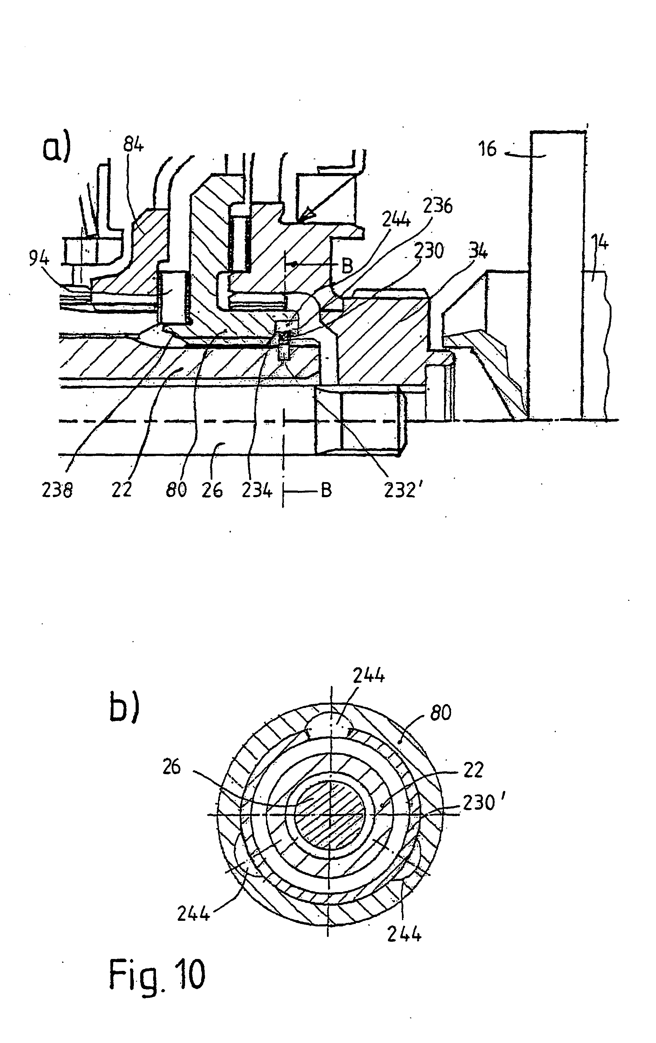

Ein ähnlicher Ansatz ist bei der Konstruktion gemäß Fig. 10 verfolgt. Als Sicherungsglied ist ein Sprengring 230' in eine zugeordnete Ringnut 232' der Getriebeeingangswelle 22 eingesetzt, der beim Aufschieben der als Baueinheit vorliegenden Doppelkupplung unter Vermittlung der Auflaufschräge 238 in die Nut 232' eintaucht, so dass das Nabenteil 80 über den federnden Sprengring hinweggeschoben werden kann.

Im montierten Zustand der Doppelkupplung greift der Sprengring 232' zwischen einen Ringanschlag des Nabenteils 80 in Richtung zum Getriebe und mehreren Anschlägen 236' des Nabenteils 80 in Richtung zur Antriebseinheit ein und ist mangels Platz zum Ausrasten fliehkraftsicher in der Nut 232' gehalten. Wird als Sprengring ein planer, beispielsweise einen rechteckigen Querschnitt aufweisender Sprengring verwendet, so verbleibt dem Nabenteil 80 gegenüber dem Sprengring 232' ein gewisses, durch den Axialabstand der zugeordneten Anschläge des Nabenteils definiertes Axialspiel. Um eine Entwicklung von Geräuschen bei Vibrationen zu vermeiden, kann man eine axiale Wellung für den Sprengring vorsehen, so dass dieser unter einer gewissen elastischen Vorspannung in beiden Axialrichtungen an den zugeordeten Axialanschlägen anliegt.

Um die Doppelkupplung zu demontieren, sind im Innenumfang des Nabenteils 80 in gewissem Winkelabstand voneinander mehrere Aussparungen 244 vorgesehen, die es ermöglichen, dass man nach einer Demontage der Eingangsnabe 34 den Sprengring 230' mittels eines Werkzeugs in die Nut 232' zurückdrückt, so dass dann der Rest der Doppelkupplung von den Getriebeeingangswellen abgezogen werden kann.

In Abweichung von den voran stehenden Ausführungen kann man auch vorsehen, dass der Sprengring 232' nach radial außen gegen eine entsprechende Vorspannschräge des Nabenteils 80 drückt und hierdurch eine axiale Vorspannung in Richtung zum Getriebe erzeugt. Hierzu kann der Sprengring in Abweichung von der üblichen Rechteck-Querschnittsform mit einer der Vorspannschräge zugeordneten Schrägfläche ausgeführt sein, damit der Sprengring besser an der Vorspannschräge abgleitet.

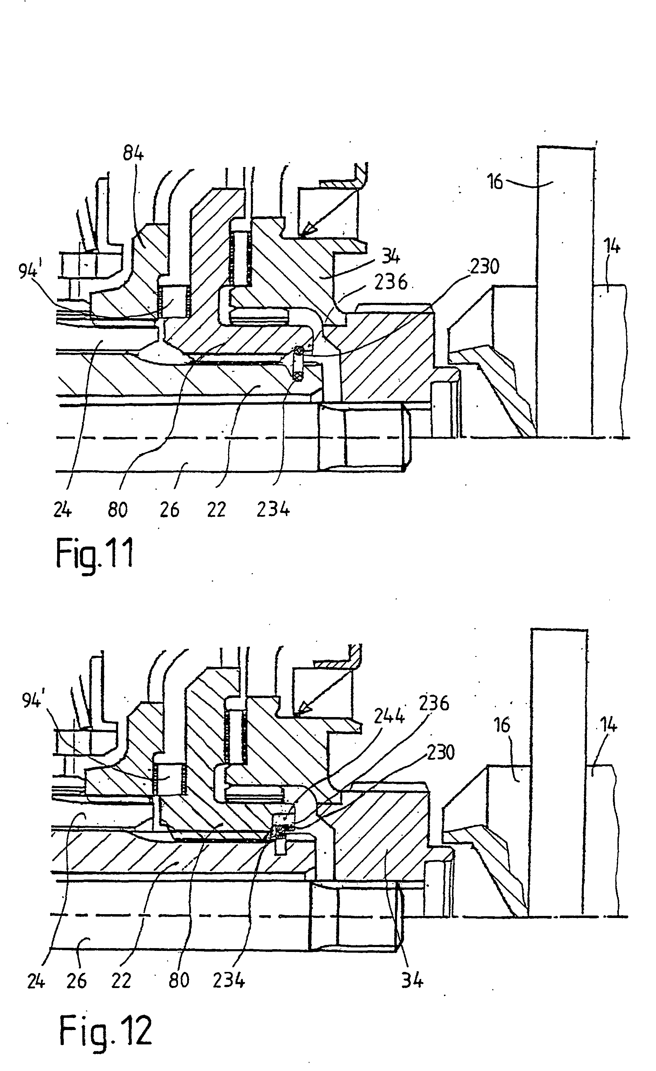

Die Ausführungsbeispiele der Fig. 11 und 12 entsprechen hinsichtlich dem axialen Sichern der Doppelkupplung durch Einschnappen bzw. Einrasten an der Getriebeeingangswellenanordnung dem Ausführungsbeispiel der Fig. 9 bzw. dem Ausführungsbeispiel der Fig. 10. Da diese Einrast- und Einschnappverbindung auch eine axiale Abstützung des Nabenteils 80 in Richtung zum Getriebe durch die Axialanschläge 236 des Nabenteils 80 gewährleistet, sind zur Bereitstellung eines definierten Axialspiels zwischen der radial äußeren Getriebeeingangswelle 24 und dem Nabenteil 80 keine weiteren Maßnahmen erforderlich. Es reicht aus, das Axiallager zwischen dem Nabenteil 80 und dem Nabenteil 84 (Axiallager 94') wie bei den Ausführungsbeispielen der Fig. 5 und 6 weniger weit nach radial innen zu ziehen und die Getriebeeingangswelle 24 und das Nabenteil 80 entsprechend axial zu dimensionieren.

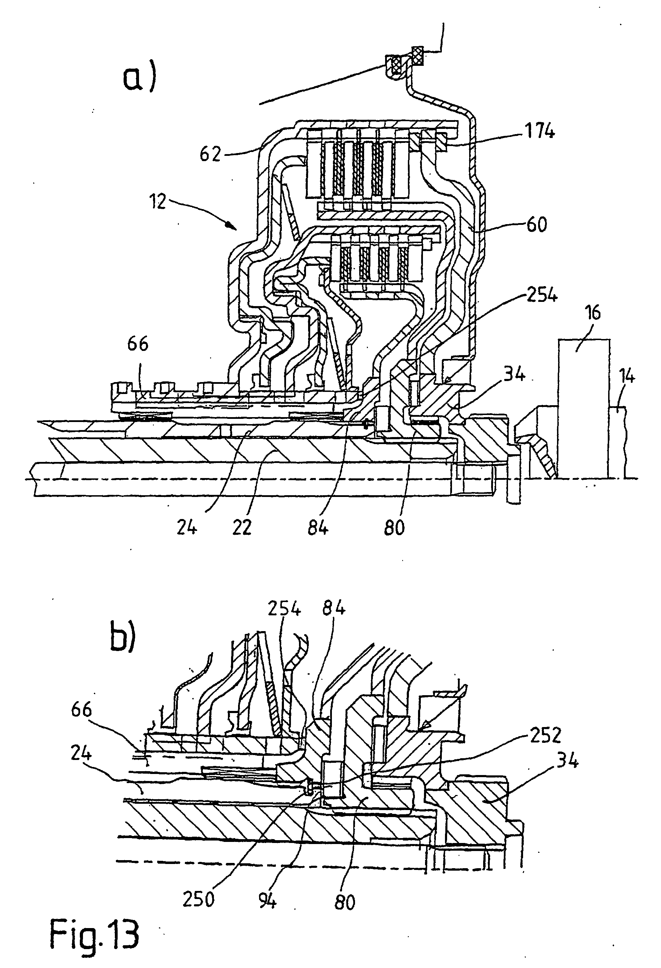

Bei den Ausführungsbeispielen der Fig. 9 bis 12 ist eine Einschnapp- bzw. Einrastverbindung zwischen dem Nabenteil 80 und der radial inneren Getriebeeingangswelle 22 vorgesehen. Eine andere, in Fig. 13 dargestellte Möglichkeit ist, eine Einschnapp- oder Einrastverbindung zwischen dem Nabenteil 84 und der radial äußeren Getriebeeingangswelle 24 vorzusehen. Hierzu kann in entsprechender Weise die Getriebeeingangswelle 24 mit einer Ringnut 250 ausgeführt sein, in die ein ggf. sprengringartiges oder ähnlich dem Glied 230 ausgeführtes, federndes Sicherungsglied 252 eingesetzt wird, das beim Aufschieben durch eine Auflaufschräge des Nabenteils 84 in die Nut 250 eingetaucht wird und im montierten Zustand der Doppelkupplung zwischen axiale Anschläge des Nabenteils 84 eingreift bzw. an einer Vorspannschräge des Nabenteils zum Vorspannen des Nabenteils 84 in Richtung zum Getriebe angreift. Es wird auf die vorstehenden Ausführungen zu den Ausführungsbeispielen der Fig. 9 bis 12 verwiesen, die leicht auf das Ausführungsbeispiel der Fig. 13 übertragbar sind. Um das auch als Ölzuführungsnabe bezeichenbare Ringteil 66 definiert axial zu positionieren, speziell in Richtung zur Antriebseinheit axial abzustützen, ist beim Ausführungsbeispiel der Fig. 13 ein zusätzliches Axiallager 254 vorgesehen, das zwischen dem Ringteil 66 und dem Nabenteil 84 wirksam ist.

Insgesamt wird die Doppelkupplung 12 in Richtung zum Getriebe unter Vermittlung des Nabenteils 80 und des Axiallagers 94 an der Getriebeeingangswelle 24 abgestützt. In Richtung zur Antriebseinheit wird die Doppelkupplung 12 unter Vermittlung des Ringteils 66, des Axiallagers 254, des Nabenteils 84 und des Sicherungsglieds 252 an der vom Getriebe fernen Nutbegrenzungsfläche der Nut 250, also an der Getriebeeingangswelle 24, abgestützt bzw. axial gesichert. Die verschiedenen Bauteile, die im Antriebsstrang zwischen dem Nabenteil 84 und dem Koppelende 16 der Abtriebswelle 14 angeordnet sind, sind unter Vermittlung des Außenlamellenträgers 62 und des Sicherungsrings 174 durch das Mitnehmerblech 60 und die daran angebrachte Eingangsnabe 34 in Richtung zur Antriebseinheit abgestützt und am Ringteil 66 axial gehalten. Auf einen Sprengring an der inneren Getriebeeingangswelle 22 entsprechend dem Sprengring 96 gemäß Fig. 1 ist wie bei den vorangehend angesprochenen erfindungsgemäßen Ausführungsbeispielen verzichtet.

Ist eine Drehwellenanordnung mit einer sich durch die geschachtelten Getriebeeingangswellen 22, 24 erstreckenden Pumpenantriebswelle 26 vorgesehen, so kann die Doppelkupplung auch unter Vermittlung der Pumpenantriebswelle in Richtung zur Antriebseinheit axial abgestützt werden. Hierbei kann wiederum eine Einschnapp- oder Einrastverbindung in der Art der Einschnapp- oder Einrastverbindungen bei den Ausführungsbeispielen der Fig. 9 bis 13 vorgesehen sein, die nunmehr zwischen der Eingangsnabe 34 der Doppelkupplung und der Pumpenantriebswelle 26 wirksam ist. Da die Eingangsnabe 34 die Doppelkupplung in Richtung zur Antriebseinheit aber gewissermaßen abschließt, sind auch andere Lösungen ohne großen Aufwand möglich, bei denen die Abstützverbindung zwischen der Pumpenantriebswelle und der Eingangsnabe erst nach dem Aufschieben der Doppelkupplung auf die Drehwellenanordnung in einem gesonderten, trotzdem wenig arbeitsaufwendigen Arbeitsschritt hergestellt wird, der insbesondere keine Teildemontage der Doppelkupplung erfordert.

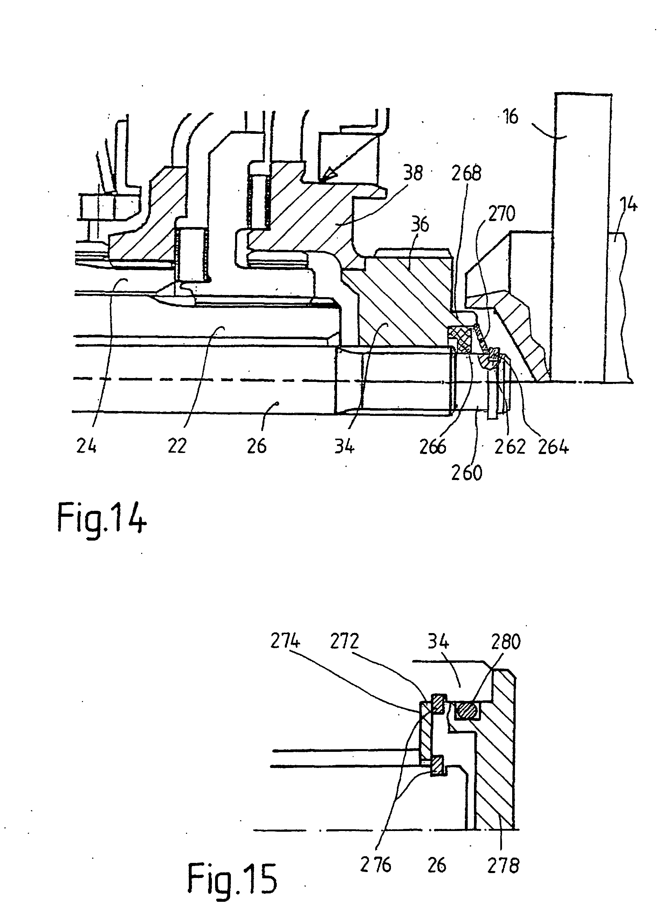

Fig. 14 zeigt ein entsprechendes Ausführungsbeispiel. Die Doppelkupplung wird als komplette Baueinheit auf die Drehwellen 22, 24, 26 aufgeschoben unter Herstellung des Drehmitnahmeeingriffs zwischen der Pumpenantriebswelle 26 und der Eingangsnabe 34. Die Pumpenwelle 26 weist ein aus der die Mitnahmeverzahnung aufweisenden Zentralöffnung der Eingangsnabe 34 vorstehendes, verzahnungsloses Ende 260 auf, das mit einer Haltenut 262 für einen Sprengring 264 ausgeführt ist. Nach dem Aufschieben der Doppelkupplung wird zuerst ein Dichtring 266 zwischen einem Ringbund 268 und der Pumpenwelle 26 eingesetzt, der den Nassraum in Richtung zur Antriebseinheit abdichtet, und es wird dann eine Federanordnung, ggf. wenigstens ein Federring 270 und der Sprengring 264 montiert. Die Federanordnung, die einen Toleranzausgleich ermöglicht und ggf. biegungsbedingte oder/und temperaturbedingte Längenänderungen bzw. Axialpositionsänderungen ausgleicht, stützt sich über den Sprengring 264 an der Pumpenwelle 26 ab, die wiederum vermittels einer nicht dargestellten Lagerung axial abgestützt ist. Diese Lagerung kann in der Pumpe oder an anderer Stelle entlang der Pumpenwelle angeordnet sein. Es ist auch denkbar, die Dichtungsfunktion der Dichtung 266 und die axiale Vorspannfunktion der Federanordnung 270 durch ein einziges Bauteil, ggf. ein Gummielement, darzustellen. Hinsichtlich der Federanordnung bestehen diverse Möglichkeiten, man könnte beispielsweise auch eine Fächerscheibe oder dergleichen verwenden.

Eine Ausführungsvariante des Beispiels der Fig. 14 ist in Fig. 15 gezeigt. Hier ist ein Abstützelement, beispielsweise eine Ringscheibe, eine Wellfeder oder eine Tellerfeder 272 zwischen einem Ringanschlag 274 der Eingangsnabe 34 und zwei Sicherungsringen, ggf. Sprengringen 276, gehalten, von denen einer in einer Innennut der Eingangsnabe 36 und der andere in eine Außennut der Pumpenwelle 26 eingreift. Durch entsprechende Ausgestaltung des Elements 274 kann von diesem eine elastische axiale Vorspannkraft auf die Eingangsnabe 34 in Richtung zum Getriebe ausgeübt werden, wobei sich das Element 274 in Richtung zur Antriebseinheit am radial inneren Sicherungsring 276 und damit an der Pumpenwelle 26 abstützt.

Ein gesondertes Deckelteil 278 dichtet den Nassraum der Doppelkupplung in Richtung zur Antriebseinheit ab. Hierzu steht das Deckelteil 278 unter Vermittlung eines Dichtrings 280 mit der Eingangsnabe 36 in Dichteingriff.

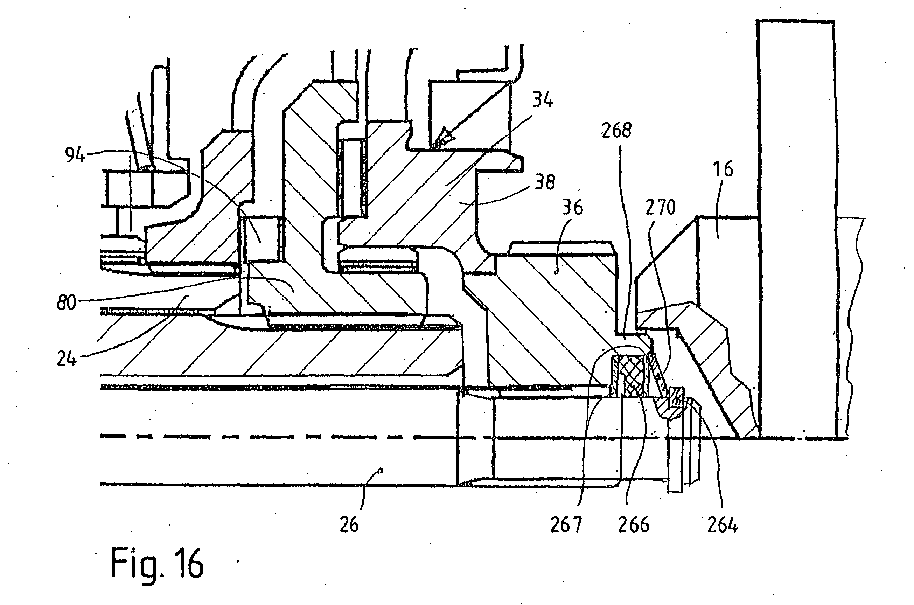

Eine weitere Ausführungsvariante ist in Fig. 16. gezeigt. Die Axialabstützung der Doppelkupplung unter Vermittlung der Eingangsnabe 36 an der Pumpenwelle 26 im Falle des Ausführungsbeispiels der Fig. 16 entspricht im Wesentlichen der Realisierung beim Ausführungsbeispiel der Fig. 14. Als den Nassraum in Richtung der Antriebseinheit abdichtende Dichtungsanordnung ist hier allerdings eine aus mehreren Dichtringen 266 und 267 gebildete Dichtungsanordnung verwendet. Überdies ist beim Ausführungsbeispiel der Fig. 16 ähnlich wie bei den Ausführungsbeispielen der Fig. 5, 6, 11, 12 dafür gesorgt, dass die äußere Getriebeeingangswelle 24 an ihrem Ende ein gewisses Axialspiel hat. Hierzu ist wiederum das Axiallager 94' weniger weit nach radial innen gezogen, so dass es nicht zwischen der Getriebeeingangswelle 24 und dem Nabenteil 80 wirkt, und für einen Axialabstand zwischen dem Nabenteil 80 und der Endfläche der Getriebeeingangswelle 24 gesorgt.

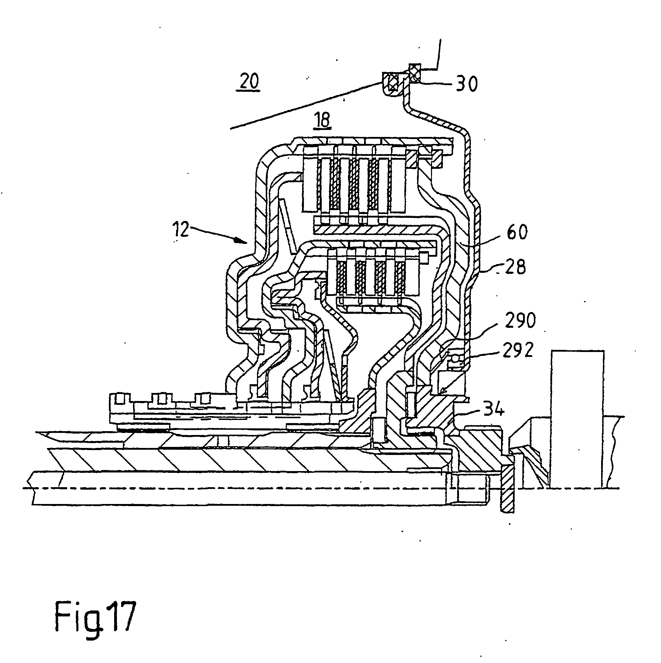

Eine einen Verzicht auf den Sprengring 96 an der Getriebeeingangswelle 22 gemäß Fig. 1 möglich machende Axialabstützung der Doppelkupplung 12 in Richtung zur Antriebseinheit kann auch unter Vermittlung des die Gehäuseglocke 18 verschließenden Verschlussdeckels 28 erreicht werden, wie in Fig. 17 beispielhaft gezeigt ist. Die Kupplung stützt sich hier unter Vermittlung ihres Mitnehmerbleches 60 über eine Federanordnung, beispielsweise eine Tellerfeder 290, und ein Drehlager 292 am radial inneren Randbereich des Deckels 28 ab. Die Federanordnung 290 spannt die gesamte Kupplung elastisch in Richtung zum Getriebe vor, so dass ein Toleranzausgleich erzielt wird. Der Deckel 28 ist über einen Sicherungsring 30 am Getriebegehäuse 20 abgestützt.

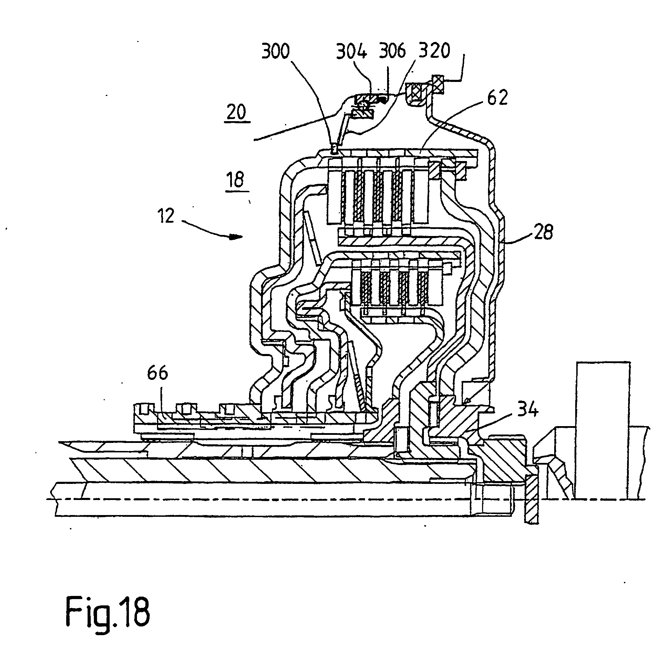

Es kann auch eine unmittelbare Abstützung der Doppelkupplung 12 in Richtung zur Antriebseinheit am Getriebegehäuse 20 vorgesehen sein. Ein entsprechendes Ausführungsbeispiel ist in Fig. 18 gezeigt. Hier ist eine zwischen dem Außenlamellenträger 62 und dem Getriebegehäuse 20 wirksame Feder- und Drehlageranordnung vorgesehen, die den Außenlamellenträger in axialer Richtung zum Getriebe vorspannt und so einerseits einen Toleranzausgleich ermöglicht und andererseits die Doppelkupplung 12 am Getriebe sichert. Beim vorliegenden Ausführungsbeispiel ist der Außenlamellenträger 62 mit einem hiervon nach radial außen vorstehenden Ringbund oder einem in eine Nut eingesetzten Abstützring 300 ausgeführt, an der eine Federanordnung, ggf. eine Tellerfeder 302, angreift, die sich wiederum über ein Drehlager 304 und ggf. einen Sicherungsring 306 am Getriebegehäuse 20 abstützt.

Betreffend die Sicherung der Doppelkupplung am Getriebe und insbesondere die Abstützung der Doppelkupplung in Richtung zur Antriebseinheit, ggf. unter elastischer Vorspannung der Doppelkupplung in Richtung zum Getriebe oder/und unter Gewährleistung eines definierten Axialspiels, sind noch weitere Varianten denkbar. So könnte man beispielsweise daran denken, eine entsprechende Einschnapp- oder Rastverbindung zwischen dem Ringteil 66 und einem stationären oder sich mit diesem mitdrehenden, getriebeseitig gelagerten Aufnahmeteil einer das Ringteil 66 aufnehmenden getriebeseitigen Aufnahme vorzusehen.

## Patentansprüche

1. Kombination aus einer Antriebseinheit, einer Mehrfach-Kupplungseinrichtung, ggf. Doppel-Kupplungseinrichtung (12), einem Getriebe sowie gegebenenfalls einer Torsionsschwingungsdämpferanordnung (220) zum Aufbau eines Kraftfahrzeug-Antriebsstrangs, bei dem die Mehrfach-Kupplungseinrichtung (12) zur Momentenübertragung zwischen der Antriebseinheit und dem Getriebe angeordnet ist;
wobei die Kupplungseinrichtung (12) eine einer ersten Getriebeeingangswelle (22) des Getriebes zugeordnete erste Kupplungsanordnung (64) und eine einer zweiten Getriebeeingangswelle (24) des Getriebes zugeordnete zweite Kupplungsanordnung (72) aufweist, um eine Abtriebswelle (14) der Antriebseinheit mit den Getriebeeingangswellen (22, 24) in Momentenübertragungsverbindung bringen zu können;
**dadurch gekennzeichnet, daß** zumindest ein Bestandteil der Kombination wenigstens eine Axial-Abstützungseinrichtung (200, 202; 202'; 212, 214; 222; 230; 230'; 250; 270, 264; 274, 276; 290, 292; 300, 304, 306) aufweist, derart dass die Kupplungseinrichtung (12) als eine fertige Baueinheit zwischen der Antriebseinheit und dem Getriebe montierbar und - gegebenenfalls unter Vermittlung der wenigstens einen Axial-Abstützungseinrichtung - axial positionierbar ist durch axiale Abstützung in Richtung Antriebseinheit und in Richtung Getriebe, ohne dass ein oder mehrere Teile der Baueinheit im Zuge des Montagevorgangs demontiert werden müssen.

2. Kombination nach Anspruch 1, **dadurch gekennzeichnet, dass** die Kupplungseinrichtung (12) in Richtung zum Getriebe axial abgestützt oder abstützbar ist und in Richtung zur Antriebseinheit axial abgestützt oder abstützbar ist.

3. Kombination nach Anspruch 2, **dadurch gekennzeichnet, dass** es sich bei der axialen Abstützung der Kupplungseinrichtung (12) in Richtung zum Getriebe oder/und in Richtung zur Antriebseinheit um eine elastische, durch wenigstens ein elastisches oder federndes Element (202; 202'; 214; 222; 230; 230'; 252; 270; 272; 290; 302) vermittelte Abstützung handelt.

4. Kombination nach einem der Ansprüche 1 bis 3, **dadurch gekennzeichnet, dass** die Baueinheit (12) getriebeseitig an- oder aufsteckbar ist

5. Kombination nach Anspruch 4, **dadurch gekennzeichnet, dass** die Baueinheit (12) getriebeseitig an- oder aufsteckbar ist und dabei unter vorzugsweise selbsttätiger Aktivierung einer Sicherung (230; 230'; 252) axial sicherbar ist.

6. Kombination nach Anspruch 4 oder 5, **dadurch gekennzeichnet, dass** die Sicherung eine Einschnapp- oder Einrastverbindung (230; 230'; 252) umfasst, die vorzugsweise ohne Einsatz eines Werkszeugs herstellbar ist.

7. Kombination nach Anspruch 6, **dadurch gekennzeichnet, dass** die Einschnapp- oder Einrastverbindung (230; 230'; 252) lösbar ist; gegebenenfalls unter Zuhilfenahme eines Werkzeugs.

8. Kombination nach einem der Ansprüche 1 bis 7, **dadurch gekennzeichnet, dass** nach dem An- oder Aufstecken oder - vorzugsweise - beim An- oder Aufstecken eine axiale Vorspannung auf wenigstens ein Bauteil (34; 80; 84; 60; 62) der Kupplungseinrichtung aufbringbar ist, die das Bauteil und damit vorzugsweise weitere Bauteile der Kupplungseinrichtung (12), ggf. die gesamte Baueinheit, in Richtung zum Getriebe vorspannt, um eine definierte Einbaulage zu gewährleisten.

9. Kombination nach Anspruch 8, **dadurch gekennzeichnet, dass** die Baueinheit (12) in Richtung zum Getriebe über wenigstens eine, vorzugsweise nur eine der Getriebeeingangswellen (22, 24) abgestützt oder abstützbar ist.

10. Kombination nach einem der Ansprüche 1 bis 9, **dadurch gekennzeichnet, dass** die Kupplungseinrichtung (12) in Richtung zum Getriebe oder/und in Richtung zur Antriebseinheit unter Vermittlung wenigstens einer der (24) Getriebeeingangswellen (22, 24) axial abgestützt oder abstützbar ist.

11. Kombination nach Anspruch 10, **dadurch gekennzeichnet, dass** die Getriebeeingangswellen (22, 24) radial geschachtelt sind und dass eine Axialabstützung der Kupplungseinrichtung in Richtung zum Getriebe oder/und in Richtung zur Antriebseinheit an einer radial inneren oder/und einer radial äußeren Getriebeeingangswelle vorgesehen ist.

12. Kombination nach einem der Ansprüche 1 bis 11, **dadurch gekennzeichnet, dass** die Kupplungseinrichtung (12) in Richtung zum Getriebe oder/und in Richtung zur Antriebseinheit unter Vermittlung einer radial innerhalb geschachtelten Getriebeeingangswellen (22, 24) verlaufenden Ölpumpen-Antriebswelle (26) axial abgestützt oder abstützbar ist.

13. Kombination nach einem der Ansprüche 1 bis 12, **dadurch gekennzeichnet, dass** die Kupplungseinrichtung (12) in Richtung zum Getriebe oder/und in Richtung zur Antriebseinheit unter Vermittlung der Abtriebswelle (14) der Antriebseinheit axial abgestützt oder abstützbar ist.

14. Kombination nach einem der Ansprüche 1 bis 13, **dadurch gekennzeichnet, dass** die Kombination eine von der Kupplungseinrichtung (12) gesonderte Torsionsschwingungsdämpferanordnung (220) aufweist, die im Antriebsstrang zwischen der Kupplungseinrichtung (12) und der Antriebseinheit angeordnet ist, und dass die Kupplungseinrichtung (12) in Richtung zum Getriebe oder/und in Richtung zur Antriebseinheit unter Vermittlung der Torsionsschwingungsdämpferanordnung (220) axial abgestützt oder abstützbar ist.

15. Kombination nach einem der Ansprüche 1 bis 13, **dadurch gekennzeichnet, dass** die Kupplungseinrichtung eine darin integrierte Torsionsschwingungsdämpferanordnung aufweist.

16. Kombination nach einem der Ansprüche 1 bis 15, **dadurch gekennzeichnet**, das Getriebe eine Getriebegehäuseglocke (20) aufweist, die einen Aufnahmeraum (18) für die Kupplungseinrichtung (12) definiert.

17. Kombination nach Anspruch 16, **dadurch gekennzeichnet, dass** die Kupplungseinrichtung (12) in Richtung zum Getriebe oder/und in Richtung zur Antriebseinheit unter Vermittlung der Getriebegehäuseglocke (20) axial abgestützt oder abstützbar ist.

18. Kombination nach Anspruch 16 oder 17, **dadurch gekennzeichnet, dass** die Kombination eine ggf. deckelartige Verschlusswandung (28) aufweist, die eine Öffnung für ein einer Eingangsseite der Kupplungseinrichtung zugeordnetes Momentenübertragungsglied, ggf. Eingangsnabe oder Eingangswelle (34), der Kupplungseinrichtung (12) aufweist und in oder an der Getriebegehäuseglocke (20) montiert oder montierbar ist, um den Aufnahmeraum (18) zu verschließen, und dass die Kupplungseinrichtung (12) in Richtung zum Getriebe oder/und in Richtung zur Antriebseinheit unter Vermittlung der Verschlusswandung (28) axial abgestützt oder abstützbar ist.

19. Kombination nach einem der Ansprüche 1 bis 18, **dadurch gekennzeichnet, dass** eine Axialabstützung der Kupplungseinrichtung (12) in Richtung zum Getriebe oder/und in Richtung zur Antriebseinheit unter Vermittlung einer Ausgangsseite (80) der ersten Kupplungsanordnung (64) oder/und einer Ausgangsseite (84) der zweiten Kupplungsanordnung (72) an wenigstens einer der Getriebeeingangswellen (22, 24) vorgesehen ist.

20. Kombination nach Anspruch 19, **dadurch gekennzeichnet, dass** eine Axialabstützung der Kupplungseinrichtung in Richtung zum Getriebe oder/und in Richtung zur Antriebseinheit derart vorgesehen ist, dass
- die Ausgangsseite (80; 84) der betreffenden Kupplungsanordnung in Richtung zum Getriebe direkt oder indirekt an der der zweiten Kupplungsanordnung (72) zugeordneten Getriebeeingangswelle (24) oder/und in Richtung zur Antriebseinheit direkt oder indirekt an der der ersten Kupplungsanordnung zugeordneten Getriebeeingangswelle abgestützt ist, oder
- die Ausgangsseite der betreffenden Kupplungsanordnung in Richtung zum Getriebe direkt oder indirekt an der der ersten Kupplungsanordnung zugeordneten Getriebeeingangswelle oder/und in Richtung zur Antriebseinheit direkt oder indirekt an der der zweiten Kupplungsanordnung zugeordneten Getriebeeingangswelle (22; 24) abgestützt ist, oder
- die Ausgangsseite (80; 84) der betreffenden Kupplungsanordnung (64; 72) in Richtung zum Getriebe und in Richtung zur Antriebseinheit direkt oder indirekt an der dieser Kupplungsanordnung zugeordneten Getriebeeingangswelle (22; 24) abgestützt ist.

21. Kombination nach einem der Ansprüche 1 bis 20, **dadurch gekennzeichnet, dass** eine Axialabstützung der Kupplungseinrichtung (12) in Richtung zum Getriebe oder/und in Richtung zur Antriebseinheit unter Vermittlung einer den Kupplungsanordnungen gemeinsamen Eingangsseite, ggf. Eingangsnabe oder Eingangswelle (34), der Kupplungseinrichtung vorgesehen ist, und zwar direkt oder indirekt an wenigstens einer der Getriebeeingangswellen (22, 24) oder/und an der Ölpumpen-Antriebswelle (26) oder/und an der Torsionsschwingungsdämpferanordnung (220) oder/und an der Abtriebswelle (14) der Antriebseinheit oder/und an der Verschlusswandung (28) oder/und an der Getriebegehäuseglocke (20).

22. Kombination nach einem der Ansprüche 1 bis 21, **dadurch gekennzeichnet, dass** eine Axialabstützung der Kupplungseinrichtung in Richtung zum Getriebe oder/und in Richtung zur Antriebseinheit unter Vermittlung der Eingangsseite, ggf. einem Lamellenträger (62), einer (64) der Kupplungsanordnungen (64, 72) vorgesehen ist, und zwar direkt oder indirekt an der Verschlusswandung (28) oder/und an der Getriebegehäuseglocke (20).

23. Kombination nach einem der Ansprüche 1 bis 22, **dadurch gekennzeichnet, dass** ein rotierendes Kupplungsgehäuse oder/und ein weitere Kupplungseinrichtungsteile umschließender Außenlamellenträger (62) direkt oder indirekt unter Vermittlung nur einer Lager- oder/und Federanordnung (302, 304) an der Getriebegehäuseglocke (20) axial abgestützt oder abstützbar ist.

24. Kombination nach einem der Ansprüche 1 bis 23, **dadurch gekennzeichnet, dass** ein die Eingangsseite der einen Kupplungsanordnung, ggf. den Außenlamellenträger (62) einer radial äußeren der Kupplungsanordnungen an einer Eingangsseite, ggf. Eingangsnabe oder Eingangswelle, der Kupplungseinrichtung ankoppelndes Mitnahmeblech (60) direkt oder unter Vermittlung nur einer Lager- oder/und Federanordnung (290, 292) an der Verschlusswandung (28) axial abgestützt oder abstützbar ist, vorzugsweise in Nachbarschaft zu oder integriert mit einer Dichtungs- oder/und Lageranordnung, die zwischen der Eingangsseite (34) der Kupplungseinrichtung und einem die Öffnung begrenzenden Wandungsrand wirksam ist.

25. Kombination nach einem der Ansprüche 1 bis 24, **gekennzeichnet durch** eine elastische Einrichtung (200; 202'; 214; 222; 230; 230'; 252; 270; 274; 290; 302), ggf. Federanordnung (200; 214; 222; 230; 230'; 252; 270; 274; 290; 302), die dafür vorgesehen ist, elastische Vorspann- oder Rückstellkräfte in axialer Richtung auf die Kupplungseinrichtung als Ganzes oder wenigstens eine Komponente der Kupplungseinrichtung aufzubringen, um diese axial zu positionieren oder/und die Kupplungseinrichtung gegen eine getriebeseitige Abstützanordnung, ggf. wenigstens eine der Getriebeeingangswellen (22, 24), vorzuspannen.

26. Kombination nach einem der Ansprüche 1 bis 25, **dadurch gekennzeichnet, dass** wenigstens eine der Baueinheit (12) zugehörige Komponente (80; 84; 34) der Kupplungseinrichtung (12), die eine Radialabstützung für die Kupplungseinrichtung als Ganzes oder wenigstens für eine Ausgangsseite einer der Kupplungsanordnungen an einer getriebeseitigen Drehwelle (22; 24; 26) vermittelt oder/und eine Drehverbindung mit dieser Drehwelle (22; 24; 26) herstellt, bei der Montage der Kupplungseinrichtung auf die Drehwelle (22; 24; 26) aufschiebbar ist und nach dem Aufschieben an der Drehwelle in einer oder in beiden Axialrichtungen abgestützt oder abstützbar, vorzugsweise elastisch abgestützt oder abstützbar, ist, ohne dass eine Demontage einer oder mehrerer Komponenten der Baueinheit erforderlich ist.

27. Kombination nach Anspruch 26, **dadurch gekennzeichnet, dass** zwischen der Komponente (80; 84) der Kupplungseinrichtung und der Drehwelle (22; 24) eine Einschnapp- oder Rastverbindung herstellbar ist, die die Axialabstützung sowie ggf. eine elastische Vorspannung in axialer Richtung vermittelt.

28. Kombination nach Anspruch 27, **dadurch gekennzeichnet, dass** zur Herstellung der Rast- oder Einschnappverbindung wenigstens ein gegenüber der Komponente und der Drehwelle gesondertes Koppelglied (230; 230'; 252) vorgesehen ist, das nach dem Aufschieben simultan in axial begrenzte Ausnehmungen der Komponente (80; 84) und der Drehwelle (22; 24) eingreift und zur Ermöglichung des Aufschiebens in eine zugeordnete Ausnehmung (234; 250) der Komponente oder der Drehwelle (22; 24) eintauchbar ist.

29. Kombination nach Anspruch 28, **dadurch gekennzeichnet, dass** die Komponente (80; 84) oder die Drehwelle wenigstens eine Auflauf-Schrägfläche (228) aufweist, die beim Aufschieben auf das Koppelglied (230; 230'; 252) wirkt und dieses eintaucht.

30. Kombination nach Anspruch 28 oder 29, **dadurch gekennzeichnet, dass** das Koppelglied von einem Koppelbügel oder Koppelring (230; 230'; 252) gebildet ist, der sich zumindest um einen Teil des Umfangs der Drehwelle erstreckt.

31. Kombination nach Anspruch 30, **dadurch gekennzeichnet, dass** das Koppelglied in der Art eines Sprengrings (230') ausgeführt ist.

32. Kombination nach Anspruch 30, **dadurch gekennzeichnet, dass** das Koppelglied von einem Drahtring oder Drahtbügel (230) gebildet ist, der mehrere gebogene Abschnitte mit zueinander entgegengesetztem Biegesinn oder/und mehrere sich streifend, vorzugsweise zumindest näherungsweise tangential zu einem Umfang der Komponente oder/und einem Umfang der Drehwelle erstreckende Abschnitte aufweist.

33. Kombination nach Anspruch 26, **gekennzeichnet durch** eine nach dem Aufschieben der Komponente (34) auf die Drehwelle (26) in Zuordnung zur Komponente (34) und zur Drehwelle (26) montierbare Abstützanordnung (264, 270; 274, 276), die die Axialabstützung der Komponente (34) an der Drehwelle (26) in zumindest einer Axialrichtung vermittelt.

34. Kombination nach Anspruch 33, **dadurch gekennzeichnet, dass** die Abstützanordnung eine einerseits an der Komponente (34) und andererseits an der Drehwelle (26) oder einem daran angebrachten Halteglied, ggf. Sprengring (264; 276), angreifende Elastik- oder Federanordnung (270; 272) umfasst.

35. Kombination nach Anspruch 34, **dadurch gekennzeichnet, dass** die Federanordnung wenigstens einen Federring (270; 272) umfasst.

36. Kombination nach einem der Ansprüche 26 bis 35, **dadurch gekennzeichnet, dass** die Drehwelle eine/die radial äußere Getriebeeingangswelle (24) der radial geschachtelten Getriebeeingangswellen (22, 24) ist und dass die Komponente eine dieser Getriebeeingangswelle zugeordnete Koppelnabe (84) der Ausgangsseite der dieser Getriebeeingangswelle zugeordneten Kupplungsanordnung (72) ist.

37. Kombination nach einem der Ansprüche 26 bis 35, **dadurch gekennzeichnet, dass** die Drehwelle eine/die radial innere Getriebeeingangswelle (22) der radial geschachtelten Getriebeeingangswellen (22, 24) ist und dass die Komponente eine dieser Getriebeeingangswelle zugeordnete Koppelnabe (80) der Ausgangsseite der dieser Getriebeeingangswelle zugeordneten Kupplungsanordnung (64) ist.

38. Kombination nach einem der Ansprüche 28 bis 35, **dadurch gekennzeichnet, dass** die Drehwelle eine/die radial in den radial geschachtelten Getriebeeingangswellen (22, 24) verlaufende Ölpumpen-Antriebswelle (26) ist und dass die Komponente eine Eingangsnabe oder Eingangswelle (34) der Kupplungseinrichtung (12) ist, die den Eingangsseiten (62, 70) beider Kupplungsanordnungen (64, 72) zugeordnet ist und zur direkten oder indirekten Ankoppelung, ggf. über eine/die Torsionsschwingungsdämpferanordnung (220), der Abtriebswelle (14) der Antriebseinheit dient.

39. Kombination nach einem der Ansprüche 33 bis 38, **dadurch gekennzeichnet, dass** eine Abdichtungs- oder Verschlussanordnung (180; 202'; 266; 278, 280; 266, 267) vorgesehen ist, die einen Ölflussweg zwischen der Ölpumpen-Antriebswelle und der Eingangsnabe oder Eingangswelle (34) in Richtung zur Antriebseinheit abdichtet oder verschließt.

40. Kombination nach 33 und 39, **dadurch gekennzeichnet, dass** die Abdichtungs- oder Verschlussanordnung (180; 202'; 266; 278; 280; 266, 267) im Zuge der Montage der Abstützanordnung montierbar ist oder/und zumindest teilweise von der Abstützanordnung (202') gebildet ist.

41. Kombination nach einem der Ansprüche 26 bis 40, **dadurch gekennzeichnet, dass** eine/die Komponente (80) auf eine sich durch wenigstens eine andere, als Hohlwelle ausgebildete Drehwelle (24) erstreckende Drehwelle (22) aufschiebbar und an dieser Drehwelle (22) in Richtung zum Getriebe abstützbar ist, und dass einem antriebseinheitsseitige Ende der anderen Drehwelle (24) axiales Bewegungs- oder/und Längenausdehnungsspiel in Richtung zur Antriebseinheit verbleibt.

42. Kombination nach Anspruch 41, **dadurch gekennzeichnet, dass** ein zwischen der Komponente (80) und der Drehwelle (22) wirksames Vermittlungsglied (206) vorgesehen ist, das die Abstützung in Richtung zu dem Getriebe vermittelt.

43. Kombination nach Anspruch 42, **dadurch gekennzeichnet, dass** das Vermittlungsglied (206) ein Ring- oder Bügelelement ist, das einerseits in eine Nut der Drehwelle oder der Komponente eingreift oder mit dieser in Eingriff bringbar ist und andererseits gegen eine Anschlag-Ringfläche der Komponente bzw. der Drehwelle anliegt oder in Anlage bringbar ist oder das beidseitig an einer jeweiligen Anschlag-Ringfläche der Drehwelle (22) und der Komponente (80) anliegt oder in Anlage bringbar ist.

44. Komponente nach Anspruch 43, **dadurch gekennzeichnet, dass** das Ring- oder Bügelelement (206) axial auf die Drehwelle aufschiebbar ist.

45. Komponente nach Anspruch 43 oder 44, **dadurch gekennzeichnet, dass** das Ring- oder Bügelelement (206) aus Runddraht hergestellt ist oder/und dass die Nut oder/und die Anschlag-Ringfläche bzw. wenigstens eine der Anschlag-Ringflächen entsprechend einem Querschnitt des Ring- oder Bügelelements abgerundet sind.

46. Kombination nach einem der Ansprüche 1 bis 45, **dadurch gekennzeichnet, dass** eine zwischen einem Koppelende (16) einer Abtriebswelle (14) der Antriebseinheit und einer Eingangsseite, ggf. Eingangsnabe oder Eingangswelle (34), der Kupplungseinrichtung (12) wirksame, vorzugsweise elastische Axialabstützungsanordnung (200; 202; 202') vorgesehen ist, die am Koppelende oder/und an der Eingangsseite (34) radial gesichert oder sicherbar ist und wenigstens eine ballige oder kugelige Kontaktfläche aufweist, die an einer zugeordneten Gegen-Kontaktfläche des Koppelendes (16) oder der Eingangsseite anliegt oder in Anlage bringbar ist.

47. Kombination nach Anspruch 46, **dadurch gekennzeichnet, dass** die Gegen-Kontaktfläche eine zentrale Axial-Ausnehmung des Koppelendes (16) bzw. der Eingangsseite axial begrenzt.

48. Kombination nach Anspruch 46 oder 47, **dadurch gekennzeichnet, dass** die Gegen-Kontaktfläche ballig oder kegelförmig ist.

49. Kombination nach einem der Ansprüche 46 bis 48, **dadurch gekennzeichnet, dass** die Kontaktfläche und die Gegen-Kontaktfläche bezogen auf eine Rotationsachse (A) der Eingangsseite (34) bzw. der Abtriebswelle (16) jeweils im Wesentlichen rotationssymmetrisch sind.

50. Kombination nach einem der Ansprüche 46 bis 49, **dadurch gekennzeichnet, dass** die Axialabstützungsanordnung ein zumindest bereichsweise balliges oder kugeliges Abstützelement (202; 202') sowie ggf. eine demgegenüber gesonderte Feder- oder Elastikanordnung (200), ggf. umfassend wenigstens eine Tellerfeder oder wenigstens ein Tellerfederpaket (200), umfasst.

51. Kombination nach Anspruch 50, **dadurch gekennzeichnet, dass** das Abstützelement (202') axial elastisch oder federnd ausgeführt ist.

52. Kombination nach Anspruch 50 oder 51, **dadurch gekennzeichnet, dass** das Abstützelement (202') eine Abdichtfunktion in Bezug auf eine Abdichtung eines Nassraums oder/und Ölkanals der Kupplungseinrichtung (12) in Richtung zur Antriebseinheit erfüllt.

53. Kombination nach einem der Ansprüche 1 bis 52, **dadurch gekennzeichnet, dass** die Eingangseite, ggf. Eingangsnabe oder Eingangswelle (34), der Kupplungseinrichtung vermittels einer Federanordnung (214; 222) an einer Ausgangsseite (220) einer/der Torsionsschwingungsdämpferanordnung oder eines an einer/der Abtriebswelle (14) der Antriebseinheit angekoppelten, Momentenübertragungsglieds (210) axial abgestützt oder abstützbar ist.

54. Kombination nach Anspruch 53, **dadurch gekennzeichnet, dass** die Eingangsseite einerseits und die Ausgangsseite (220) bzw. das Momentenübertragungsglied (210) andererseits vermittels ggf. eine Steckverzahnung bildenden Mitnahmeformationen in gegenseitigem Drehmitnahmeeingriff stehen oder bringbar sind.

55. Kraftfahrzeug-Antriebsstrang, aufgebaut aus einer Kombination nach einem der vorhergehenden Ansprüche.

56. Mehrfach-Kupplungseinrichtung, ggf. Doppel-Kupplungseinrichtung (12), für die Anordnung in einem Kraftfahrzeug-Antriebsstrang zwischen einer Antriebseinheit und einem Getriebe, wobei die Kupplungseinrichtung eine einer ersten Getriebeeingangswelle (22) des Getriebes zugeordnete erste Kupplungsanordnung (64) und eine einer zweiten Getriebeeingangswelle (24) des Getriebes zugeordnete zweite Kupplungsanordnung (72) aufweist zur Momentenübertragung zwischen der Antriebseinheit und dem Getriebe,
**dadurch gekennzeichnet,**
**dass** die Kupplungseinrichtung (12) in Form einer vorgefertigten Baueinheit vorliegt und als fertige Baueinheit (12) zwischen der Antriebseinheit und dem Getriebe montierbar und durch axiale Abstützung in Richtung Antriebseinheit und in Richtung Getriebe axial positionierbar ist, ohne dass ein oder mehrere Teile der Baueinheit im Zuge des Montagevorgangs demontiert werden müssen, wobei wenigstens eine gegenüber der Baueinheit gesonderte Axial-Abstützungseinrichtung vorgesehen oder/und wenigstens eine Komponente der Baueinheit mit einer Axial-Abstützungseinrichtung ausgeführt ist, die eine Axialabstützung für die Baueinheit in Richtung zum Getriebe oder/und in Richtung zur Antriebseinheit vermittelt, wobei die gesonderte Axial-Abstützungseinrichtung zumindest teilweise gegenüber der Baueinheit getriebeseitig vormontierbar oder ggf. zumindest teilweise gegenüber der Baueinheit getriebeseitig oder/und antriebseinheitsseitig nachmontierbar ist.

57. Kupplungseinrichtung nach Anspruch 56, **gekennzeichnet durch** sich auf die Kupplungseinrichtung beziehende Merkmale wenigstens eines der Ansprüche 1 bis 54.

## Claims

1. Combination of a drive unit, of a multiple clutch device, if appropriate double-clutch device (12), of a transmission and, if appropriate, of a torsional vibration damper arrangement (220) for setting up a motor vehicle drive train, in which the multiple clutch device (12) is arranged for torque transfer between the drive unit and the transmission, the clutch device (12) having a first clutch arrangement (64) assigned to a first transmission input shaft (22) of the transmission and a second clutch arrangement (22) assigned to a second transmission input shaft (24) of the transmission, so that a driven shaft (14) of the drive unit can be moved into torque-transfer connection with the transmission input shafts (22, 24), **characterized in that** at least an integral part of the combination has at least one axial-support device (200, 202; 202'; 212, 214; 222; 230; 230'; 250; 270, 264; 274, 27b; 290, 292; 300, 304, 306), in such a way that the clutch device (12) can be mounted as a finished structural unit between the drive unit and the transmission and, if appropriate by means of the at least one axial-support device, can be positioned axially by axial support in the direction of the drive unit and in the direction of the transmission, without one or more parts of the structural unit having to be demounted in the course of the mounting operation.

2. Combination according to Claim 1, **characterized in that** the clutch device (12) is supported or supportable axially in the direction of the transmission and is supported or supportable axially in the direction of the drive unit.

3. Combination according to Claim 2, **characterized in that** the axial support of the clutch device (12) in the direction of the transmission and/or in the direction of the drive unit is an elastic support imparted by at least one elastic or resilient element (202; 202'; 214; 222; 230; 230'; 252; 270; 272; 290; 302).

4. Combination according to one of Claims 1 to 3, **characterized in that** the structural unit (12) can be attached or slipped on on the transmission side.

5. Combination according to Claim 4, **characterized in that** the structural unit (12) can be attached or slipped on on the transmission side and at the same time can be secured axially with the preferably automatic activation of a securing device (230; 230'; 252).

6. Combination according to Claim 4 or 5, **characterized in that** the securing device comprises a snap-in or latching connection (230; 230'; 252) which can be made preferably without the use of a tool.

7. Combination according to Claim 6, **characterized in that** the snap-in or latching connection (230; 230'; 252) is releasable, if appropriate with the aid of a tool.

8. Combination according to one of Claims 1 to 7, **characterized in that**, after attachment or slipping-on or preferably during attachment or slipping-on, an axial prestress can be applied to at least one component (34; 80; 84; 60; 62) of the clutch device, the said prestress prestressing the component and consequently preferably further components of the clutch device (12), if appropriate the entire structural unit, in the direction of the transmission, enough to ensure a defined installation position.

9. Combination according to Claim 8, **characterized in that** the structural unit (12) is supported or supportable in the direction of the transmission via at least one, preferably only one of the transmission input shafts (22, 24).

10. Combination according to one of Claims 1 to 9, **characterized in that** the clutch device (12) is supported or supportable axially in the direction of the transmission and/or in the direction of the drive unit by means of at least one (24) of the transmission input shafts (22, 24).

11. Combination according to Claim 10, **characterized in that** the transmission input shafts (22, 24) are nested radially, and **in that** an axial support of the clutch device in the direction of the transmission and/or the direction of the drive unit is provided on a radially inner and/or a radially outer transmission shaft.

12. Combination according to one of Claims 1 to 11, **characterized in that** the clutch device (12) is supported or supportable axially in the direction of the transmission and/or in the direction of the drive unit by means of an oil-pump drive shaft (26) running radially within nested transmission input shafts (22, 24).

13. Combination according to one of Claims 1 to 12, **characterized in that** the clutch device (12) is supported or supportable axially in the direction of the transmission and/or in the direction of the drive unit by means of the driven shaft (14) of the drive unit.

14. Combination according to one of Claims 1 to 13, **characterized in that** the combination has a torsional vibration damper arrangement (220) which is. separate from the clutch device (12) and is arranged in the drive train between the clutch device (12) and the drive unit, and **in that** the clutch device (12) is supported or supportable axially in the direction of the transmission and/or in the direction of the drive unit by means of the torsional vibration damper arrangement (220).

15. Combination according to one of Claims 1 to 13, **characterized in that** the clutch device has a torsional vibration damper arrangement integrated in it.

16. Combination according to one of Claims 1 to 15, **characterized in that** the transmission has a transmission housing bell (20) which defines a reception space (18) for the clutch device (12).

17. Combination according to Claim 16, **characterized in that** the clutch device (12) is supported or supportable axially in the direction of the transmission and/or in the direction of the driving unit by means of the transmission housing bell (20).

18. Combination according to Claim 16 or 17, **characterized in that** the combination has an, if appropriate, lid-like closing wall (28) which has an orifice for a torque-transfer member, if appropriate input hub or input shaft (34), of the clutch device (12), the said torque-transfer member being assigned to an input side of the clutch device, and which is mounted on mountable in or on the transmission housing bell (20), in order to close the reception space (18), and **in that** the clutch device (12) is supported or supportable axially in the direction of the transmission and/or in the direction of the drive unit by means of the closing wall (28).

19. Combination according to one of Claims 1 to 18, **characterized in that** an axial support of the clutch device (12) in the direction of the transmission and/or in the direction of the drive unit is provided by means of an output side (80) of the first clutch arrangement (64) and/or an output side (84) of the second clutch arrangement (72) on at least one of the transmission input shafts (22, 24).

20. Combination according to Claim 19, **characterized in that** an axial support of the clutch device in the direction of the transmission and/or in the direction of the drive unit is provided in such a way that
- the output side (80; 84) of the respective clutch arrangement is supported in the direction of the transmission directly or indirectly on the transmission input shaft (24) assigned to the second clutch arrangement (72) and/or in the direction of the drive unit directly or indirectly on the transmission input shaft assigned to the first clutch arrangement, or
- the output side of the respective clutch arrangement is supported in the direction of the transmission directly or indirectly on the transmission input shaft assigned to the first clutch arrangement and/or in the direction of the drive unit directly or indirectly on the transmission input shaft (22; 24) assigned to the second clutch arrangement, or
- the output side (80; 84) of the respective clutch arrangement (64; 72) is supported in the direction of the transmission and in the direction of the drive unit directly or indirectly on the transmission input shaft (22; 24) assigned to this clutch arrangement.

21. Combination according to one of Claims 1 to 20, **characterized in that** an axial support of the clutch device (12) in the direction of the transmission and/or in the direction of the drive unit is provided by means of an input side, if appropriate input hub or input shaft (34), of the clutch device, the said input side being common to the clutch arrangement, specifically directly or indirectly on at least one of the transmission input shafts (22, 24) and/or on the oil-pump drive shaft (26) and/or on the torsional vibration damper arrangement (220) and/or on the driven shaft (14) of the drive unit and/or on the closing wall (28) and/or on the transmission housing bell (20).

22. Combination according to one of Claims 1 to 21, **characterized in that** an axial support of the clutch device in the direction of the transmission and/or in the direction of the drive unit is provided by means of the input side, if appropriate lamella carrier (62), of one (64) of the clutch arrangements (64, 72), specifically directly or indirectly on the closing wall (28) and/or on the transmission housing bell (20).

23. Combination according to one of Claims 1 to 22, **characterized in that** a rotating clutch housing and/or an outer lamella carrier (62) surrounding further clutch device parts is supported or supportable axially on the transmission housing bell (20) directly or indirectly by means of only one bearing arrangement and/or spring arrangement (302, 304).

24. Combination according to one of Claims 1 to 23, **characterized in that** a take-up plate (60) coupling the input side of one clutch arrangement, if appropriate the outer lamella carrier (62) of a radially outer clutch arrangement of the clutch arrangements, to an input side, if appropriate input hub or input shaft, of the clutch device is supported or supportable axially on the closing wall (28) directly or by means of one bearing arrangement and/or spring arrangement (290, 292), preferably in the vicinity of or so as to be integrated with a sealing and/or bearing arrangement which is active between the input side (34) of the clutch device and a wall edge delimiting the orifice.

25. Combination according to one of Claims 1 to 24, **characterized by** an elastic device (200; 202'; 214; 222; 230; 230'; 252; 270; 274; 290; 302), if appropriate spring arrangement (200; 214; 222; 230; 230'; 252; 270; 274; 290; 302), which is provided for applying elastic prestressing or restoring forces in the axial direction to the clutch device as a whole or to at least one component of the clutch device, in order to position this axially and/or to prestress the clutch device relative to a transmission-side supporting arrangement, if appropriate at least one of the transmission input shafts (22, 24).

26. Combination according to one of Claims 1 to 25, **characterized in that** at least one component (80; 84; 34), belonging to the structural unit (12), of the clutch device (12), the said component providing a radial support to the clutch device as a whole or at least for an output side of one of the clutch arrangements on a transmission-side rotary shaft (22; 24; 26) and/or making a rotational connection with this rotary shaft (22; 24; 26), can be pushed onto the rotary shaft (22; 24; 26) during the mounting of the clutch device and, after being pushed on, is supported or supportable, preferably elastically supported or supportable, on the rotary shaft in one or in both axial directions, without a demounting one or more components of the structural unit being necessary.

27. Combination according to Claim 26, **characterized in that** a snap-in or latching connection, which provides the axial support and, if appropriate, an elastic prestress in the axial direction, can be made between the component (80; 84) of the clutch device and the rotary shaft (22; 24).

28. Combination according to Claim 27, **characterized in that**, to make the latching or snap-in connection, at least one coupling member (230; 230'; 252) is provided, which is separate with respect to the component and to the rotary shaft and which, after being pushed on, simultaneously engages into axially delimited recesses of the component (80; 84) and of the rotary shaft (22; 24) and, to make pushing-on possible, can penetrate into an assigned recess (234; 250) of the component or of the rotary shaft (22; 24).

29. Combination according to Claim 28, **characterized in that** the component (80; 84) of the rotary shaft has at least one sloping run-on surface (228) which, during pushing-on, acts on the coupling member (230; 230'; 252) and causes the latter to penetrate.

30. Combination according to Claim 28 or 29, **characterized in that** the coupling member is formed by a coupling yoke or coupling ring (230; 230'; 252) which extends at least around part of the circumference of the rotary shaft.

31. Combination according to Claim 30, **characterized in that** the coupling member is designed in the manner of a spring ring (230).

32. Combination according to Claim 30, **characterized in that** the coupling member is formed by a wire ring or wire yoke (230) which has a plurality of bent portions with bending directions opposite to one another and/or a plurality of portions extending oscillatingly, preferably at least approximately tangentially to a circumference of the component and/or a circumference of the rotary shaft.

33. Combination according to Claim 26, **characterized by** a supporting arrangement (264, 270; 274, 276) which, after the component (34) has been pushed onto the rotary shaft (26), can be mounted in assignment to the component (34) and to the rotary shaft (26) and which provides the axial support of the component (34) on the rotary shaft (26) in at least one axial direction.

34. Combination according to Claim 33, **characterized in that** the supporting arrangement comprises an elastic or spring arrangement (270; 272) engaging, on the one hand, on the component (34) and, on the other hand, on the rotary shaft (26) or a holding member, if appropriate spring ring (264; 276), attached to the latter.

35. Combination according to Claim 34, **characterized in that** the spring arrangement comprises at least one spring ring (270; 272).

36. Combination according to one of Claims 26 to 35, **characterized in that** the rotary shaft is a/the radially outer transmission input shaft (24) of the radially nested transmission input shafts (22, 24), and **in that** the component is a coupling hub (84), assigned to this transmission input shaft, at the output side of the clutch arrangement (72) assigned to this transmission input shaft.

37. Combination according to one of Claims 26 to 35, **characterized in that** the rotary shaft is a/the radially inner transmission input shaft (22) of the radially nested transmission input shafts (22, 24), and **in that** the component is a coupling hub (80), assigned to this transmission input shaft, at the output side of the clutch arrangement (64) assigned to this transmission input shaft.

38. Combination according to one of Claims 28 to 35, **characterized in that** the rotary shaft is a/the oil-pump drive shaft (26) running radially in the radially nested transmission input shafts (22, 24), and **in that** the component is an input hub or input shaft (34) of the clutch device (12), the said component being assigned to the input sides (62, 70) of the two clutch arrangements (64, 72) and serving for the direct or indirect coupling, if appropriate via a/the torsional vibration damper arrangement (220), of the driven shaft (14) of the drive unit.

39. Combination according to one of Claims 33 to 38, **characterized in that** a sealing-off or closing arrangement (180; 202'; 266; 278, 280; 266, 267) is provided, which seals off or closes an oil flow path between the oil-pump drive shaft and the input hub or input shaft (34) in the direction of the drive unit.

40. Combination according to Claims 33 and 39, **characterized in that** the sealing-off or closing arrangement (180; 202'; 266; 278; 280; 266, 267) can be mounted in the course of the mounting of the supporting arrangement and/or is formed at least partially by the supporting arrangement (202').

41. Combination according to one of Claims 26 to 40, **characterized in that** a/the component (80) can be pushed onto a rotary shaft (22) extending through at least one other rotary shaft (24) designed as hollow shaft and can be supported on this rotary shaft (22) in the direction of the transmission, and **in that** axial movement play and/or length extension play in the direction of the drive unit remains for a drive-unit-side end of the other rotary shaft (24).

42. Combination according to Claim 41, **characterized in that** an imparting member (206) active between the component (80) and the rotary shaft (22) is provided, and imparts the support in the direction of the transmission.

43. Combination according to Claim 42, **characterized in that** the imparting member (206) is a ring element or yoke element which, on the one hand, engages into a groove of the rotary shaft or of the component or can be brought into engagement with this and, on the other hand, bears or can be brought to bear against an annular stop surface of the component or of the rotary shaft or which bears or can be brought to bear on both sides against a respective annular stop surface of the rotary shaft (22) and of the component (80).

44. Combination according to Claim 43, **characterized in that** the ring or yoke element (206) can be pushed axially onto the rotary shaft.

45. Combination according to one of Claim 43 or 44, **characterized in that** the ring or yoke element (206) is produced from round wire and/or **in that** the groove and/or the annular stop surface or at least one of the annular stop surfaces are rounded according to a cross section of the ring or yoke element.

46. Combination according to one of Claims 1 to 45, **characterized in that** a preferably elastic axial-support arrangement (200; 202; 202') is provided, which is active between a coupling end (16) of a driven shaft (14) of the drive unit and an input side, if appropriate input hub or input shaft (34), of the clutch device (12) and which is secured or securable radially to the coupling end and/or to the input side (34) and has at least one crowned or spherical contact surface which bears or can be brought to bear against an assigned countercontact surface of the coupling end (16) or of the input side.

47. Combination according to Claim 46, **characterized in that** the countercontact surface axially delimits a central axial recess of the coupling end (16) or of the input side.

48. Combination according to Claim 46 or 47, **characterized in that** the countercontact surface is crowned or conical.

49. Combination according to one of Claims 46 to 48, **characterized in that** the contact surface and the countercontact surface are in each case essentially rotationally symmetrical with respect to an axis of rotation (A) of the input side (34) or of the driven shaft (16).

50. Combination according to one of Claims 46 to 49, **characterized in that** the axial-support arrangement comprises a supporting element (202; 202') crowned or spherical at least in regions and, if appropriate, a spring or elastic arrangement (200) separate with respect to the latter and, if appropriate, comprising at least one cup spring or at least one cup-spring assembly (200).

51. Combination according to Claim 50, **characterized in that** the supporting element (202') is of axially elastic or resilient design.

52. Combination according to Claim 50 or 51, **characterized in that** the supporting element (202') fulfils a sealing-off function with regard to sealing off a wet space and/or oil duct of the clutch device (12) in the direction of the drive unit.

53. Combination according to one of Claims 1 to 52, **characterized in that** the input side, if appropriate input hub or input shaft (34), of the clutch device is supported or supportable axially by means of a spring arrangement (214; 222) on an output side (220) of a/the torsional vibration damper arrangement or of a torque-transfer member (210) coupled to a/the driven shaft (14) of the drive unit.

54. Combination according to Claim 53, **characterized in that** the input side, on the one hand, and the output side (220) or the torque-transfer member (210), on the other hand, are or can be brought into mutual rotational take-up engagement by means of take-up formations which, if appropriate, form an intermeshing toothing.

55. Motor vehicle drive train, set up from a combination according to one of the preceding claims.

56. Multiple clutch device, if appropriate double-clutch device (12), for arrangement in a motor vehicle drive train between a drive unit and a transmission, the clutch device having a first clutch arrangement (64) assigned to a first transmission input shaft (22) of the transmission and a second clutch arrangement (72) assigned to a second transmission input shaft (24) of the transmission, for torque transfer between the drive unit and the transmission, **characterized in that** the clutch device (12) is in the form of a prefabricated structural unit and can be mounted as a finished structural unit (12) between the drive unit and the transmission and can be positioned axially by means of axial support in the direction of the drive unit and in the direction of the transmission, without one or more parts of the structural unit having to be demounted in the course of the mounting operation, at least one axial-support device separate with respect to the structural unit being provided and/or at least one component of the structural unit being designed with an axial-support device which imparts axial support for the structural unit in the direction of the transmission and/or in the direction of the drive unit, the separate axial-support device being premountable at least partially with respect to the structural unit on the transmission side or, if appropriate, being postmountable at least partially with respect to the structural unit on the transmission side and/or on the drive-unit side.

57. Clutch device according to Claim 56, **characterized by** those features of at least one of Claims 1 to 54 which relate to the clutch device.

## Revendications

1. Combinaison d'une unité d'entraînement, d'un dispositif à embrayages multiples, éventuellement d'un dispositif à double embrayage (12), d'une boîte de vitesses ainsi qu'éventuellement d'un agencement d'amortisseur d'oscillations de torsion (220) pour la construction d'une chaîne de transmission d'un véhicule automobile, dans laquelle le dispositif à embrayages multiples (12) est disposé en vue du transfert de couple entre l'unité d'entraînement et la boîte de vitesses ; le dispositif d'embrayage (12) présentant un premier agencement d'embrayage (64) associé à un premier arbre d'entrée de boîte de vitesses (22) de la boîte de vitesses et un deuxième agencement d'embrayage (72) associé à un deuxième arbre d'entrée de boîte de vitesses (24) de la boîte de vitesses, afin de pouvoir amener en liaison de transfert de couple un arbre de sortie (14) de l'unité d'entraînement avec les arbres d'entrée de boîte de vitesses (22, 24) ;
**caractérisée en ce que**
au moins un composant de la combinaison présente au moins un dispositif de support axial (200, 202 ; 202' ; 212, 214 ; 222 ; 230 ; 230' ; 250 ; 270, 264 ; 274, 276 ; 290, 292 ; 300, 304, 306) de telle sorte que le dispositif d'embrayage (12) puisse être monté sous forme d'une unité constructive finie entre l'unité d'entraînement et la boîte de vitesses et - éventuellement par l'intermédiaire de l'au moins un dispositif de support axial - puisse être positionné axialement par un support axial dans la direction de l'unité d'entraînement et dans la direction de la boîte de vitesses, sans qu'une ou plusieurs pièces de l'unité constructive ne doivent être démontées au cours de l'opération de montage.

2. Combinaison selon la revendication 1, **caractérisée en ce que** le dispositif d'embrayage (12) est supporté ou peut être supporté axialement dans la direction de la boîte de vitesses et est supporté ou peut être supporté axialement dans la direction de l'unité d'entraînement.

3. Combinaison selon la revendication 2, **caractérisée en ce que** le support axial du dispositif d'embrayage (12) dans la direction de la boîte de vitesses et/ou dans la direction de l'unité d'entraînement est un support élastique assuré par au moins un élément élastique ou à ressort (202 ; 202' ; 214 ; 222 ; 230 ; 230' ; 252 ; 270 ; 272 ; 290 ; 302).

4. Combinaison selon l'une quelconque des revendications 1 à 3, **caractérisée en ce que** l'unité constructive (12) peut être appliquée ou montée par enfichage du côté de la boîte de vitesses.

5. Combinaison selon la revendication 4, **caractérisée en ce que** l'unité constructive (12) peut être appliquée ou montée par enfichage du côté de la boîte de vitesses et est en l'occurrence susceptible d'être fixée axialement par l'activation de préférence automatique d'une fixation (230 ; 230' ; 252).

6. Combinaison selon la revendication 4 ou 5, **caractérisée en ce que** la fixation comprend une connexion par encliquetage ou engrènement (230 ; 230' ; 252) qui peut être fabriquée de préférence sans utiliser d'outil.

7. Combinaison selon la revendication 6, **caractérisée en ce que** la connexion par encliquetage ou engrènement (230 ; 230' ; 252) est desserrable, éventuellement à l'aide d'un outil.

8. Combinaison selon l'une quelconque des revendications 1 à 7, **caractérisée en ce qu'**après l'application ou le montage par enfichage ou de préférence au cours de celle-ci ou celui-ci, une précontrainte axiale peut être appliquée sur au moins un composant (34 ; 80 ; 84 ; 60 ; 62) du dispositif d'embrayage, laquelle précontraint le composant et de ce fait de préférence d'autres composants du dispositif d'embrayage (12), éventuellement l'ensemble de l'unité constructive, dans la direction de la boîte de vitesses, afin de garantir une position de montage définie.

9. Combinaison selon la revendication 8, **caractérisée en ce que** l'unité constructive (12) est supportée ou peut être supportée dans la direction de la boîte de vitesses par le biais d'au moins un, de préférence seulement par l'un des arbres d'entrée de boîte de vitesses (22, 24).

10. Combinaison selon l'une quelconque des revendications 1 à 9, **caractérisée en ce que** le dispositif d'embrayage (12) est supporté ou peut être supporté axialement dans la direction de la boîte de vitesses et/ou dans la direction de l'unité d'entraînement par l'intermédiaire d'au moins l'un (24) des arbres d'entrée de boîte de vitesses (22, 24).

11. Combinaison selon la revendication 10, **caractérisée en ce que** les arbres d'entrée de boîte de vitesses (22, 24) sont emboîtés radialement et **en ce qu'**un support axial du dispositif d'embrayage dans la direction de la boîte de vitesses et/ou dans la direction de l'unité d'entraînement est prévu sur un arbre d'entrée de boîte de vitesses radialement interne et/ou radialement externe.

12. Combinaison selon l'une quelconque des revendications 1 à 11, **caractérisée en ce que** le dispositif d'embrayage (12) est supporté ou peut être supporté axialement dans la direction de la boîte de vitesses et/ou dans la direction de l'unité d'entraînement par l'intermédiaire d'un arbre d'entraînement de pompe à huile (26) s'étendant radialement à l'intérieur des arbres d'entrée de boîte de vitesses emboîtés (22, 24).

13. Combinaison selon l'une quelconque des revendications 1 à 12, **caractérisée en ce que** le dispositif d'embrayage (12) est supporté ou peut être supporté axialement dans la direction de la boîte de vitesses et/ou dans la direction de l'unité d'entraînement par l'intermédiaire de l'arbre de sortie (14) de l'unité d'entraînement.

14. Combinaison selon l'une quelconque des revendications 1 à 13, **caractérisée en ce que** la combinaison présente un agencement d'amortisseur d'oscillations de torsion (220) séparé du dispositif d'embrayage (12), qui est disposé dans la chaîne de transmission entre le dispositif d'embrayage (12) et l'unité d'entraînement, et **en ce que** le dispositif d'embrayage (12) est supporté ou peut être supporté axialement dans la direction de la boîte de vitesses et/ou dans la direction de l'unité d'entraînement par l'intermédiaire de l'agencement d'amortisseur d'oscillations de torsion (220).

15. Combinaison selon l'une quelconque des revendications 1 à 13, **caractérisée en ce que** le dispositif d'embrayage présente un agencement d'amortisseur d'oscillations de torsion intégré dans celui-ci.

16. Combinaison selon l'une quelconque des revendications 1 à 15, **caractérisée en ce que** la boîte de vitesses présente une cloche de carter de boîte de vitesses (20) qui définit un espace de logement (18) pour le dispositif d'embrayage (12).

17. Combinaison selon la revendication 16, **caractérisée en ce que** le dispositif d'embrayage (12) est supporté ou peut être supporté axialement dans la direction de la boîte de vitesses et/ou dans la direction de l'unité d'entraînement par l'intermédiaire de la cloche de carter de boîte de vitesses (20).

18. Combinaison selon la revendication 16 ou 17, **caractérisée en ce que** la combinaison présente une paroi de fermeture éventuellement de type couvercle (28), qui présente une ouverture pour un organe de transfert de couple associé à un côté d'entrée du dispositif d'embrayage, éventuellement un moyeu d'entrée ou un arbre d'entrée (34), du dispositif d'embrayage (12), et est montée ou peut être montée dans ou sur la cloche de carter d'embrayage (20), afin de fermer l'espace de logement (18), et **en ce que** le dispositif d'embrayage (12) est supporté ou peut être supporté axialement dans la direction de la boîte de vitesses et/ou dans la direction de l'unité d'entraînement par l'intermédiaire de la paroi de fermeture (28).

19. Combinaison selon l'une quelconque des revendications 1 à 18, **caractérisée en ce que** l'on prévoit un support axial du dispositif d'embrayage (12) dans la direction de la boîte de vitesses et/ou dans la direction de l'unité d'entraînement par l'intermédiaire d'un côté de sortie (80) du premier agencement d'embrayage (64) et/ou d'un côté de sortie (84) du deuxième agencement d'embrayage (72) sur au moins l'un des arbres d'entrée de boîte de vitesses (22, 24).

20. Combinaison selon la revendication 19, **caractérisée en ce que** l'on prévoit un support axial du dispositif d'embrayage dans la direction de la boîte de vitesses et/ou dans la direction de l'unité d'entraînement de telle sorte que :
- le côté de sortie (80 ; 84) de l'agencement d'embrayage concerné soit supporté dans la direction de la boîte de vitesses directement ou indirectement sur l'arbre d'entrée de boîte de vitesses (24) associé au deuxième agencement d'embrayage (72) et/ou dans la direction de l'unité d'entraînement directement ou indirectement sur l'arbre d'entrée de boîte de vitesses associé au premier agencement d'embrayage, ou
- le côté de sortie de l'agencement d'embrayage concerné soit supporté dans la direction de la boîte de vitesses directement ou indirectement sur l'arbre d'entrée de boîte de vitesses associé au premier agencement d'embrayage et/ou dans la direction de l'unité d'entraînement directement ou indirectement sur l'arbre d'entrée de boîte de vitesses (22 ; 24) associé au deuxième agencement d'embrayage, ou
- le côté de sortie (80 ; 84) de l'agencement d'embrayage concerné (64 ; 72) soit supporté dans la direction de la boîte de vitesses et dans la direction de l'unité d'entraînement directement ou indirectement sur l'arbre d'entrée de boîte de vitesses (22 ; 24) associé à cet agencement d'embrayage.

21. Combinaison selon l'une quelconque des revendications 1 à 20, **caractérisée en ce que** l'on prévoit un support axial du dispositif d'embrayage (12) dans la direction de la boîte de vitesses et/ou dans la direction de l'unité d'entraînement par l'intermédiaire d'un côté d'entrée commun aux agencements d'embrayage, éventuellement un moyeu d'entrée ou un arbre d'entrée (34), du dispositif d'embrayage, et ce directement ou indirectement sur au moins l'un des arbres d'entrée de boîte de vitesses (22, 24) et/ou sur l'arbre d'entraînement de la pompe à huile (26) et/ou sur l'agencement d'amortisseur d'oscillations de torsion (220) et/ou sur l'arbre de sortie (14) de l'unité d'entraînement et/ou sur la paroi de fermeture (28) et/ou sur la cloche de carter de boîte de vitesses (20).

22. Combinaison selon l'une quelconque des revendications 1 à 21, **caractérisée en ce que** l'on prévoit un support axial du dispositif d'embrayage dans la direction de la boîte de vitesses et/ou dans la direction de l'unité d'entraînement par l'intermédiaire du côté d'entrée, éventuellement un support à lamelles (62), de l'un (64) des agencements d'embrayage (64, 72), et ce directement ou indirectement sur la paroi de fermeture (28) et/ou sur la cloche de carter de boîte de vitesses (20).

23. Combinaison selon l'une quelconque des revendications 1 à 22, **caractérisée en ce qu'**un carter d'embrayage rotatif et/ou un support à lamelles extérieur (62) entourant d'autres pièces du dispositif d'embrayage est supporté ou peut être supporté axialement directement ou indirectement par l'intermédiaire de seulement un agencement de palier et/ou de ressort (302, 304) sur la cloche de carter de boîte de vitesses (20).

24. Combinaison selon l'une quelconque des revendications 1 à 23, **caractérisée en ce qu'**une tôle d'entraînement (60) reliant le côté d'entrée d'un agencement d'embrayage, éventuellement le support à lamelles extérieur (62) d'un des agencements d'embrayage radialement externe à un côté d'entrée, éventuellement un moyeu d'entrée ou un arbre d'entrée, du dispositif d'embrayage, est supportée ou peut être supportée axialement directement ou indirectement par l'intermédiaire de seulement un agencement de palier et/ou de ressort (290, 292) sur la paroi de fermeture (28), de préférence à proximité de ou de manière intégrée à un agencement de joint et/ou de palier, qui agit entre le côté d'entrée (34) du dispositif d'embrayage et un bord de paroi limitant l'ouverture.

25. Combinaison selon l'une quelconque des revendications 1 à 24, **caractérisée par** un dispositif élastique (200 ; 202' ; 214 ; 222 ; 230 ; 230' ; 252 ; 270 ; 274 ; 290 ; 302), éventuellement un agencement de ressort (200 ; 214 ; 222 ; 230 ; 230' ; 252 ; 270 ; 274 ; 290 ; 302), qui est prévu pour appliquer des forces de précontrainte ou de rappel élastiques dans la direction axiale sur le dispositif d'embrayage dans son ensemble ou au moins un composant du dispositif d'embrayage, afin de positionner celui-ci axialement et/ou de précontraindre le dispositif d'embrayage contre un agencement de support du côté de la boîte de vitesses, éventuellement au moins l'un des arbres d'entrée de boîte de vitesses (22, 24).

26. Combinaison selon l'une quelconque des revendications 1 à 25, **caractérisée en ce qu'**au moins l'un des composants (80 ; 84 ; 34) appartenant à l'unité constructive (12) du dispositif d'embrayage (12), qui permet un support radial pour le dispositif d'embrayage dans son ensemble ou au moins pour un côté de sortie de l'un des agencements d'embrayage sur un arbre de rotation (22 ; 24 ; 26) du côté de la boîte de vitesses et/ou qui crée une connexion rotative avec cet arbre de rotation (22 ; 24 ; 26), peut être poussé lors du montage du dispositif d'embrayage sur l'arbre de rotation (22 ; 24 ; 26), et est supporté ou peut être supporté après l'emboîtement sur l'arbre de rotation dans une ou dans les deux directions axiales, de préférence est supporté ou peut être supporté élastiquement, sans qu'un démontage d'un ou de plusieurs composants de l'unité constructive soit nécessaire.

27. Combinaison selon la revendication 26, **caractérisée en ce qu'**une connexion par encliquetage ou engrènement peut être créée entre les composants (80 ; 84) du dispositif d'embrayage et l'arbre de rotation (22 ; 24), laquelle permet le support axial ainsi qu'éventuellement une précontrainte élastique dans la direction axiale.

28. Combinaison selon la revendication 27, **caractérisée en ce que** pour la fabrication de la connexion par encliquetage ou engrènement, on prévoit au moins un organe d'accouplement (230 ; 230' ; 252) séparé vis-à-vis des composants et de l'arbre de rotation, lequel vient en prise après son emboîtement simultanément dans des évidements délimités axialement des composants (80 ; 84) et de l'arbre de rotation (22 ; 24) et peut être enfoncé dans un évidement associé (234 ; 250) des composants ou de l'arbre de rotation (22 ; 24) pour permettre l'emboîtement.

29. Combinaison selon la revendication 28, **caractérisée en ce que** le composant (80 ; 84) ou l'arbre de rotation présente au moins une face oblique d'entrée (228), qui agit sur l'organe d'accouplement (230 ; 230' ; 252) lors de l'emboîtement et pénètre dans celui-ci.

30. Combinaison selon la revendication 28 ou 29, **caractérisée en ce que** l'organe d'accouplement est formé par un étrier d'accouplement ou une bague d'accouplement (230 ; 230' ; 252), qui s'étend au moins sur une partie de la périphérie de l'arbre de rotation.

31. Combinaison selon la revendication 30, **caractérisée en ce que** l'organe d'accouplement est réalisé à la manière d'un jonc (230').

32. Combinaison selon la revendication 30, **caractérisée en ce que** l'organe d'accouplement est formé par une bague en fil métallique ou un étrier en fil métallique (230), qui présente plusieurs portions cintrées avec un sens de flexion opposé les unes par rapport aux autres et/ou plusieurs portions s'étendant en affleurement, de préférence au moins approximativement tangentiellement à une périphérie du composant et/ou à une périphérie de l'arbre de rotation.

33. Combinaison selon la revendication 26, **caractérisée par** un agencement de support (264, 270 ; 274, 276) pouvant être monté après l'emboîtement du composant (34) sur l'arbre de rotation (26) en association avec le composant (34) et avec l'arbre de rotation (26), qui permet le support axial du composant (34) sur l'arbre de rotation (26) dans au moins une direction axiale.

34. Combinaison selon la revendication 33, **caractérisée en ce que** l'agencement de support comprend un agencement élastique ou à ressort (270 ; 272) venant en prise d'une part avec le composant (34) et d'autre part avec l'arbre de rotation (26) ou avec un organe de fixation, éventuellement un jonc (264 ; 276) monté sur celui-ci.

35. Combinaison selon la revendication 34, **caractérisée en ce que** l'agencement à ressort comprend au moins une bague à ressort (270 ; 272).

36. Combinaison selon l'une quelconque des revendications 26 à 35,. **caractérisée en ce que** l'arbre de rotation est un/l'arbre d'entrée de boîte de vitesses radialement extérieur (24) des arbres d'entrée de boîte de vitesses emboîtés radialement (22, 24) et **en ce que** le composant est un moyeu d'accouplement (84) associé à cet arbre d'entrée de boîte de vitesses du côté de la sortie de l'agencement d'embrayage (72) associé à cet arbre d'entrée de boîte de vitesses.

37. Combinaison selon l'une quelconque des revendications 26 à 35, **caractérisée en ce que** l'arbre de rotation est un/l'arbre d'entrée de boîte de vitesses radialement interne (22) des arbres d'entrée de boîte de vitesses emboîtés radialement (22, 24) et **en ce que** le composant est un moyeu d'accouplement (80) associé à cet arbre d'entrée de boîte de vitesses du côté de la sortie de l'agencement d'embrayage (64) associé à cet arbre d'entrée de boîte de vitesses.

38. Combinaison selon l'une quelconque des revendications 28 à 35, **caractérisée en ce que** l'arbre de rotation est un/l'arbre d'entraînement de la pompe à huile (26) s'étendant radialement dans les arbres d'entrée de boîte de vitesses (22, 24) emboîtés radialement, et **en ce que** le composant est un moyeu d'entrée ou un arbre d'entrée (34) du dispositif d'embrayage (12), qui est associé aux côtés d'entrée (62, 70) des deux agencements d'embrayage (64, 72) et sert à l'accouplement direct ou indirect, éventuellement par le biais d'un/de l'agencement d'amortisseur d'oscillations de torsion (220), de l'arbre de sortie (14) de l'unité d'entraînement.

39. Combinaison selon l'une quelconque des revendications 33 à 38, **caractérisée en ce que** l'on prévoit un agencement d'étanchéité ou de fermeture (180 ; 202' ; 266 ; 278 ; 280 ; 266, 267), qui isole hermétiquement ou ferme un chemin d'écoulement d'huile entre l'arbre d'entraînement de la pompe à huile et le moyeu d'entrée ou l'arbre d'entrée (34) dans la direction de l'unité d'entraînement.

40. Combinaison selon la revendication 33 et 39, **caractérisée en ce que** l'agencement d'étanchéité ou de fermeture (180 ; 202' ; 266 ; 278 ; 280 ; 266, 267) peut être monté au cours du montage de l'agencement de support et/ou est formé au moins partiellement par l'agencement de support (202').

41. Combinaison selon l'une quelconque des revendications 26 à 40, **caractérisée en ce qu'**un/le composant (80) peut être emboîté sur un arbre de rotation (22) s'étendant à travers au moins un autre arbre de rotation (24) réalisé sous forme d'un arbre creux, et peut être supporté sur cet arbre de rotation (22) dans la direction de la boîte de vitesses, et **en ce qu'**il subsiste à une extrémité du côté de l'unité d'entraînement de l'autre arbre de rotation (24) un jeu de dilatation longitudinale et/ou de déplacement axial dans la direction de l'unité d'entraînement.

42. Combinaison selon la revendication 41, **caractérisée en ce que** l'on prévoit un organe auxiliaire (206) agissant entre le composant (80) et l'arbre de rotation (22), lequel permet le support dans la direction de la boîte de vitesses.

43. Combinaison selon la revendication 42, **caractérisée en ce que** l'organe auxiliaire (206) est un élément annulaire ou en forme d'étrier, qui vient en prise d'une part dans une rainure de l'arbre de rotation ou du composant ou qui peut être amené en engagement avec celle-ci, et d'autre part s'appuie ou peut être amené en appui contre une face annulaire de butée du composant ou de l'arbre de rotation ou qui s'appuie ou peut être amené en appui des deux côtés contre une face annulaire de butée respective de l'arbre de rotation (22) et du composant (80).

44. Composant selon la revendication 43, **caractérisé en ce que** l'élément annulaire ou en forme d'étrier (206) peut être poussé axialement sur l'arbre de rotation.

45. Composant selon la revendication 43 ou 44, **caractérisé en ce que** l'élément annulaire ou en forme d'étrier (206) est fabriqué en fil métallique rond, et/ou **en ce que** la rainure et/ou la face annulaire de butée respectivement au moins l'une des faces annulaires de butée sont arrondies en fonction d'une section transversale de l'élément annulaire ou en forme d'étrier.

46. Combinaison selon l'une quelconque des revendications 1 à 45, **caractérisée en ce que** l'on prévoit un agencement de support axial (200 ; 202 ; 202') de préférence élastique, agissant entre une extrémité d'accouplement (16) d'un arbre de sortie (14) de l'unité d'entraînement et un côté d'entrée, éventuellement le moyeu d'entrée ou l'arbre d'entrée (34), du dispositif d'embrayage (12), lequel est fixé ou peut être fixé radialement sur l'extrémité d'accouplement et/ou sur le côté d'entrée (34) et présente au moins une face de contact bombée ou sphérique, qui s'appuie ou peut être amenée en appui contre une face de contact conjuguée associée de l'extrémité d'accouplement (16) ou du côté d'entrée.

47. Combinaison selon la revendication 46, **caractérisée en ce que** la face de contact conjuguée limite axialement un évidement axial central de l'extrémité d'accouplement (16) ou du côté d'entrée.

48. Combinaison selon la revendication 46 ou 47, **caractérisée en ce que** la face de contact conjuguée est en forme bombée ou conique.

49. Combinaison selon l'une quelconque des revendications 46 à 48, **caractérisée en ce que** la face de contact et la face de contact conjuguée présentent essentiellement à chaque fois une symétrie de révolution par rapport à un axe de rotation (A) du côté d'entrée (34) ou de l'arbre de sortie (16).

50. Combinaison selon l'une quelconque des revendications 46 à 49, **caractérisée en ce que** l'agencement de support axial comprend un élément de support (202 ; 202') bombé ou sphérique au moins par portion ainsi qu'éventuellement un agencement à ressort ou élastique (200) séparé de celui-ci, éventuellement comprenant au moins un ressort Belleville ou au moins un paquet de ressorts Belleville (200).

51. Combinaison selon la revendication 50, **caractérisée en ce que** l'élément de support (202') est réalisé de manière axialement élastique ou à ressort.

52. Combinaison selon la revendication 50 ou 51, **caractérisée en ce que** l'élément de support (202') remplit une fonction d'étanchéité par rapport à une étanchéité d'un espace humide et/ou d'un canal d'huile du dispositif d'embrayage (12) dans la direction de l'unité d'entraînement.

53. Combinaison selon l'une quelconque des revendications 1 à 52, **caractérisée en ce que** le côté d'entrée, éventuellement le moyeu d'entrée ou l'arbre d'entrée (34), du dispositif d'embrayage, par l'intermédiaire d'un agencement à ressort (214 ; 222) est supporté ou peut être supporté axialement d'un côté de sortie (220) d'un/de l'agencement d'amortisseur d'oscillations de torsion ou d'un organe de transfert de couple (210) raccordé à un/l'arbre de sortie (14) de l'unité d'entraînement.

54. Combinaison selon la revendication 53, **caractérisée en ce que** le côté d'entrée d'une part et le côté de sortie (220) ou l'organe de transfert de couple (210) d'autre part, sont ou peuvent être amenés en engagement d'entraînement en rotation mutuel par l'intermédiaire éventuellement de formations d'entraînement formant une denture de raccordement.

55. Chaîne de transmission pour véhicule automobile, construite à partir d'une combinaison selon l'une quelconque des revendications précédentes.

56. Dispositif d'embrayages multiples, éventuellement dispositif d'embrayage double (12), pour l'agencement dans une chaîne de transmission d'un véhicule automobile, entre une unité d'entraînement et une boîte de vitesses, dans lequel le dispositif d'embrayage présente un premier agencement d'embrayage (64) associé à un premier arbre d'entrée de boîte de vitesses (22) de la boîte de vitesses et un deuxième agencement d'embrayage (72) associé à un deuxième arbre d'entrée de boîte de vitesses (24) de la boîte de vitesses, pour le transfert de couple entre l'unité d'entraînement et la boîte de vitesses,
**caractérisé en ce que**
le dispositif d'embrayage (12) se présente sous la forme d'une unité constructive préfabriquée et peut être monté sous forme d'une unité constructive finie (12) entre l'unité d'entraînement et la boîte de vitesses et peut être positionné axialement par support axial dans la direction de l'unité d'entraînement et dans la direction de la boîte de vitesses, sans qu'une ou plusieurs pièces de l'unité constructive doivent être démontées au cours de l'opération de montage, au moins un dispositif de support axial séparé vis-à-vis de l'unité constructive étant prévu et/ou au moins un composant de l'unité constructive étant réalisé avec un dispositif de support axial, qui permet un support axial pour l'unité constructive dans la direction de la boîte de vitesses et/ou dans la direction de l'unité d'entraînement, le dispositif de support axial séparé pouvant être prémonté au moins partiellement vis-à-vis de l'unité constructive du côté de la boîte de vitesses ou éventuellement pouvant être monté en rattrapage au moins partiellement vis-à-vis de l'unité constructive du côté de la boîte de vitesses et/ou du côté de l'unité d'entraînement.

57. Dispositif d'embrayage selon la revendication 56, **caractérisé par** les caractéristiques d'au moins une des revendications 1 à 54 se rapportant au dispositif d'embrayage.
